# EUROPEAN PATENT SPECIFICATION

(11) **EP 3 752 562 B1**
(45) Date of publication and mention of the grant of the patent: **12.01.2022**
(21) Application number: 19702938.2
(22) Date of filing: 11.02.2019
(51) Int. Cl.: C08L 27/12, C08L 79/08

(54) **FLUOROELASTOMER CURABLE COMPOSITION**
HÄRTBARE FLUORELASTOMERZUSAMMENSETZUNG
COMPOSITION DURCISSABLE DE FLUOROÉLASTOMÈRE

(30) Priority: 12.02.2018 US 201862629505 P; 22.08.2018 EP 18190115
(43) Date of publication of application: 23.12.2020
(73) Proprietor: Solvay Specialty Polymers Italy S.p.A., 20021 Bollate (MI) (IT)
(72) Inventor: O'KEEFFE, Sean, Dawsonville, GA 30534 (US); KITCHENS, Terry Michael, Cleveland, Georgia 30528 (US); BENSON, Bryan, Ball Ground, GA 30107 (US); SCHILD, Philip, Chester, PA 19382 (US); FANTONI, Matteo, 20020 Vanzaghello MI (IT)
(74) Representative: Benvenuti, Federica
(86) International application number: PCT/EP2019/053343
(87) International publication number: WO 2019/155073

(56) References cited:
- WO-A1-2006/010651
- JP-A- 2017 071 686
- US-B2- 7 323 515

## Description

### Technical Field

The invention pertains to certain fluoroelastomer compositions having ability to adhere upon curing to various substrates, to a process for their manufacture, to a method for fabricating shaped articles comprising curing the said fluoroelastomer compositions, to cured articles therefrom, and to assemblies including a substrate and said cured articles.

### Background Art

Vulcanized (per)fluoroelastomers are materials with excellent heat-resistance and chemical-resistance characteristics, which are generally used in the manufacture of sealing articles such as oil seals, gaskets, shaft seals and O-rings in which the leak-tightness, the mechanical properties and the resistance to substances such as mineral oils, hydraulic fluids, solvents or chemical agents of diverse nature must be ensured over a wide range of working temperatures, from low to high temperatures, and wherein materials might be called to comply with severe requirements in terms of purity, plasma resistance and particles release.

In applications where the sealing part has to withstand mechanical forces, for example as a component of a part of a motor vehicle or for safety reasons, for example, as a component of a storage device for fuels, the fluoroelastomer component may be secured to a another part, which may be a metal part or a plastic part, particularly silicone, polycarbonate, polyester, or polyamide, resulting in a multi-material component possessing performance that combines the best attributes of both constituents. Such assemblies are required to possess strong bonding among each other: it is not an easy task to get robust adhesion of cured (per)fluoroelastomer to metals or plastics, because of their low surface energy and lack of functional groups.

Several attempts have been already exemplified in the past for addressing the challenge of improving adhesion between fluororubbers and different substrates.

For instance, U.S. Pat. No. 5,656,121 describes that composite materials of fluoropolymers with other thermoplastic resins can be prepared by using a coating containing low molecular weight diamine compound to create a strong bond between the components. However, for economical reasons it may be desirable for the composite material to be formed directly by combining the elastic and the rigid components without requiring adhesives or bonding additives like tie-layers and primers to avoid additional processing steps and material costs.

Still, in U.S. Pat. No. 6,162,385 composite materials with strong and direct bonds between fluoroelastomer and polyamide polymer are described, whereas the polyamide is selected in a manner to possess high concentration of amine end groups, and the fluoroelastomer is ionically cured while adhering thereto.

Yet in this domain, EP2714388 is directed to a composite material comprising a first component directly bonded to a second component, the first component comprising a peroxide cured fluoroelastomer having a temperature reflection TR-10 of -19 C or lower as measured according to ASTM D 1329 and the second component comprising a polyamide resin, this composite material possessing heat stable bonds between the fluoroelastomer and the polyamide.

Nevertheless, none of these approaches actually provides for a solution based on a (per)fluoroelastomer base compound having ability to adhere to a variety of substrates, with no peculiar pre-treatment or modification of the said substrate, and which can be easily processed in e.g. 2K molding processing machineries, with optimum performances.

JP 2017/071686 relates to a perfluororubber molding including a body made from a perfluororubber including powder of the aromatic heat-resistant resin blended therein, and a coating of an aromatic heat-resistant resin on at least a part of the surface of the molding. The heat-resistant resin may be an aromatic polyimide.

US7323515 relates to a sealing composition which comprises a crosslinkable fluoroelastomer, a crosslinking agent and a reinforcing polyimide resin powder.

WO 2006/010651 is directed to an aromatic polyimide composition comprising an aromatic polyamide-imide and an amount of 0.5 to 30 % wt of a fluoroelastomer, possessing improved flexibility during molding process, suitable for molding parts having undercuts or complex geometry.

### Summary of invention

The Applicant has now found that certain compositions comprising a (per)fluoroelastomer, a cross-linking system, and a well-defined amount of at least one polyamideimide can solve above mentioned problems and are particularly effective in enabling curing to deliver outstanding adhesion to a variety of substrates, while maintaining all the advantageous mechanical and sealing properties of (per)fluoroelastomers.

The invention hence pertains to a composition [composition (C)] comprising:
- at least one (per)fluoroelastomer [fluoroelastomer (A)];
- at least one cross-linking system; and
- at least one aromatic polyamide-imide polymer [polymer (PAI)], said polymer (PAI) being present in an amount of at least 0.5 phr, and at most 30.0 phr, with respect to the fluoroelastomer (A).

For the purposes of this invention, the term "(per)fluoroelastomer" [fluoroelastomer (A)] is intended to designate a fluoropolymer resin serving as a base constituent for obtaining a true elastomer, said fluoropolymer resin comprising more than 10 % wt, preferably more than 30 % wt, of recurring units derived from at least one ethylenically unsaturated monomer comprising at least one fluorine atom (hereafter, (per)fluorinated monomer) and, optionally, recurring units derived from at least one ethylenically unsaturated monomer free from fluorine atom (hereafter, hydrogenated monomer) .

True elastomers are defined by the ASTM, Special Technical Bulletin, No. 184 standard as materials capable of being stretched, at room temperature, to twice their intrinsic length and which, once they have been released after holding them under tension for 5 minutes, return to within 10 % of their initial length in the same time.

Generally fluoroelastomer (A) comprises recurring units derived from at least one (per)fluorinated monomer, wherein said (per)fluorinated monomer is generally selected from the group consisting of:
- C₂-C₈ fluoro- and/or perfluoroolefins, such as tetrafluoroethylene (TFE), hexafluoropropene (HFP), pentafluoropropylene, and hexafluoroisobutylene;
- C₂-C₈ hydrogenated monofluoroolefins, such as vinyl fluoride; 1,2-difluoroethylene, vinylidene fluoride (VDF) and trifluoroethylene (TrFE);
- (per)fluoroalkylethylenes complying with formula CH₂=CH-R_{f0}, in which R_{f0} is a C₁-C₆ (per)fluoroalkyl or a C₁-C₆ (per)fluorooxyalkyl having one or more ether groups ;
- chloro- and/or bromo- and/or iodo-C₂-C₆ fluoroolefins, like chlorotrifluoroethylene (CTFE);
- fluoroalkylvinylethers complying with formula CF₂=CFOR_{f1} in which R_{f1} is a C₁-C₆ fluoro- or perfluoroalkyl, e.g. -CF₃, -C₂F₅, -C₃F₇;
- hydrofluoroalkylvinylethers complying with formula CH₂=CFOR_{f1} in which R_{f1} is a C₁-C₆ fluoro- or perfluoroalkyl, e.g. -CF₃, -C₂F₅, -C₃F₇;
- fluoro-oxyalkylvinylethers complying with formula CF₂=CFOX₀, in which X₀ is a C₁-C₁₂ oxyalkyl, or a C₁-C₁₂ (per)fluorooxyalkyl having one or more ether groups; in particular (per)fluoro-methoxy-vinylethers complying with formula CF₂=CFOCF₂OR_{f2} in which R_{f2} is a C₁-C₆ fluoro- or perfluoroalkyl, e.g. -CF₃, -C₂F₅, -C₃F₇ or a C₁-C₆ (per)fluorooxyalkyl having one or more ether groups, like -C₂F₅-O-CF₃;
- functional fluoro-alkylvinylethers complying with formula CF₂=CFOY₀, in which Yo is a C₁-C₁₂ alkyl or (per)fluoroalkyl, or a C₁-C₁₂ oxyalkyl or a C₁-C₁₂ (per)fluorooxyalkyl, said Yo group comprising a carboxylic or sulfonic acid group, in its acid, acid halide or salt form;
- (per)fluorodioxoles, of formula : 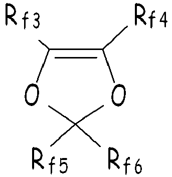 wherein each of R_{f3}, R_{f4}, R_{f5}, R_{f6}, equal to or different from each other, is independently a fluorine atom, a C₁-C₆ fluoro- or per(halo)fluoroalkyl, optionally comprising one or more oxygen atom, e.g. -CF₃, -C₂F₅,-C₃F₇, -OCF₃, -OCF₂CF₂OCF₃.

Examples of hydrogenated monomers are notably hydrogenated alpha-olefins, including ethylene, propylene, 1-butene, diene monomers, styrene monomers, alpha-olefins being typically used.

Fluoroelastomers (A) are in general amorphous products or products having a low degree of crystallinity (crystalline phase less than 20 % by volume) and a glass transition temperature (T_{g}) below room temperature. In most cases, the fluoroelastomer (A) has advantageously a T_{g} below 10° C, preferably below 5°C, more preferably 0°C.

The fluoroelastomer (A) is preferably selected among:
(1) VDF-based copolymers, in which VDF is copolymerized with at least one additional comonomer selected from the group consisting of:
   (a) C₂-C₈ perfluoroolefins , such as tetrafluoroethylene (TFE), hexafluoropropylene (HFP);
   (b) hydrogen-containing C₂-C₈ olefins, such as vinyl fluoride (VF), trifluoroethylene (TrFE), hexafluoroisobutene (HFIB), perfluoroalkyl ethylenes of formula CH₂ = CH-R_{f}, wherein R_{f} is a C₁-C₆ perfluoroalkyl group;
   (c) C₂-C₈ fluoroolefins comprising at least one of iodine, chlorine and bromine, such as chlorotrifluoroethylene (CTFE);
   (d) (per)fluoroalkylvinylethers (PAVE) of formula CF₂ = CFOR_{f}, wherein R_{f} is a C₁-C₆ (per)fluoroalkyl group, preferably CF₃, C₂F₅, C₃F₇;
   (e) (per)fluoro-oxy-alkylvinylethers of formula CF₂ = CFOX, wherein X is a C₁-C₁₂ ((per)fluoro)-oxyalkyl comprising catenary oxygen atoms, e.g. the perfluoro-2-propoxypropyl group;
   (f) (per)fluorodioxoles having formula : 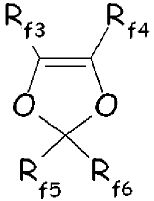 wherein each of R_{f3}, R_{f4}, R_{f5}, R_{f6}, equal to or different from each other, is independently selected from the group consisting of fluorine atom and C₁-C₆ (per)fluoroalkyl groups, optionally comprising one or more than one oxygen atom, such as notably -CF₃, -C₂F₅, -C₃F₇, -OCF₃, -OCF₂CF₂OCF₃; preferably, perfluorodioxoles;
   (g) (per)fluoro-methoxy-vinylethers (MOVE, hereinafter) having formula:

      CF₂=CFOCF₂OR_{f2}

      wherein R_{f2} is selected from the group consisting of C₁-C₆ (per)fluoroalkyls; C₅-C₆ cyclic (per)fluoroalkyls; and C₂-C₆ (per)fluorooxyalkyls, comprising at least one catenary oxygen atom; R_{f2} is preferably -CF₂CF₃ (MOVE1);-CF₂CF₂OCF₃ (MOVE2); or -CF₃ (MOVE3);
   (h) C₂-C₈ non-fluorinated olefins (Ol), for example ethylene and propylene; and
(2) TFE-based copolymers, in which TFE is copolymerized with at least one additional comonomer selected from the group consisting of (c), (d), (e), (g), (h) and (i) as above detailed .

Optionally, fluoroelastomer (A) of the present invention may also comprises recurring units derived from a bis-olefin [bis-olefin (OF)] having general formula : 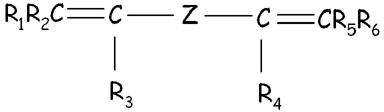 wherein R₁, R₂, R₃, R₄, R₅ and R₆, equal or different from each other, are H or C₁-C₅ alkyl; Z is a linear or branched C₁-C₁₈ (hydro)carbon radical (including alkylene or cycloalkylene radical), optionally containing oxygen atoms, preferably at least partially fluorinated, or a (per)fluoro(poly)oxyalkylene radical comprising one or more catenary ethereal bonds.

The bis-olefin (OF) is preferably selected from the group consisting of those complying with formulae (OF-1), (OF-2) and (OF-3) : (OF-1) 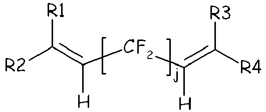 wherein j is an integer between 2 and 10, preferably between 4 and 8, and R1, R2, R3, R4, equal or different from each other, are H, F or C₁₋₅ alkyl or (per)fluoroalkyl group; (OF-2) 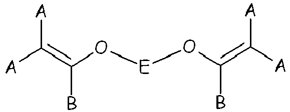 wherein each of A, equal or different from each other and at each occurrence, is independently selected from F, Cl, and H; each of B, equal or different from each other and at each occurrence, is independently selected from F, Cl, H and OR_{B}, wherein R_{B} is a branched or straight chain alkyl radical which can be partially, substantially or completely fluorinated or chlorinated; E is a divalent group having 2 to 10 carbon atom, optionally fluorinated, which may be inserted with ether linkages; preferably E is a -(CF₂)ₘ- group, with m being an integer from 3 to 5; a preferred bis-olefin of (OF-2) type is F₂C=CF-O-(CF₂)₅-O-CF=CF₂. (OF-3) 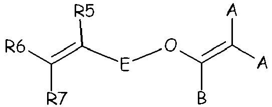 wherein E, A and B have the same meaning as above defined; R5, R6, R7, equal or different from each other, are H, F or C₁₋₅ alkyl or (per)fluoroalkyl group.

Among specific compositions of fluoroelastomers (A) suitable for the purpose of the invention, mention can be made of fluoroelastomers having the following compositions (in mol %) :
(i) vinylidene fluoride (VDF) 35-85 %, hexafluoropropene (HFP) 10-45 %, tetrafluoroethylene (TFE) 0-30 %, perfluoroalkyl vinyl ethers (PAVE) 0-15 %, bis-olefin (OF) 0-5 %;
(ii) vinylidene fluoride (VDF) 50-80 %, perfluoroalkyl vinyl ethers (PAVE) 5-50 %, tetrafluoroethylene (TFE) 0-20 %, bis-olefin (OF) 0-5 %;
(iii) vinylidene fluoride (VDF) 20-30 %, C₂-C₈ non-fluorinated olefins (Ol) 10-30 %, hexafluoropropene (HFP) and/or perfluoroalkyl vinyl ethers (PAVE) 18-27 %, tetrafluoroethylene (TFE) 10-30 %, bis-olefin (OF) 0-5 %;
(iv) tetrafluoroethylene (TFE) 50-80 %, perfluoroalkyl vinyl ethers (PAVE) 20-50 %, bis-olefin (OF) 0-5 %;
(v) tetrafluoroethylene (TFE) 45-65 %, C₂-C₈ non-fluorinated olefins (Ol) 20-55 %, vinylidene fluoride 0-30 %, bis-olefin (OF) 0-5 %;
(vi) tetrafluoroethylene (TFE) 32-60 % mol %, C₂-C₈ non-fluorinated olefins (Ol) 10-40 %, perfluoroalkyl vinyl ethers (PAVE) 20-40 %, fluorovinyl ethers (MOVE) 0-30 %, bis-olefin (OF) 0-5 %;
(vii) tetrafluoroethylene (TFE) 33-75 %, perfluoroalkyl vinyl ethers (PAVE) 15-45 %, vinylidene fluoride (VDF) 5-30 %, hexafluoropropene HFP 0-30 %, bis-olefin (OF) 0-5 %;
(viii) vinylidene fluoride (VDF) 35-85 %, fluorovinyl ethers (MOVE) 5-40 %, perfluoroalkyl vinyl ethers (PAVE) 0-30 %, tetrafluoroethylene (TFE) 0-40 %, hexafluoropropene (HFP) 0-30 %, bis-olefin (OF) 0-5 %;
(ix) tetrafluoroethylene (TFE) 20-70 %, fluorovinyl ethers (MOVE) 30-80 %, perfluoroalkyl vinyl ethers (PAVE) 0-50 %, bis-olefin (OF) 0-5 %.

The fluoroelastomer (A) can be prepared by any known method, such as emulsion or micro-emulsion polymerization, suspension or micro-suspension polymerization, bulk polymerization and solution polymerization.

According to certain preferred embodiments of the invention, the fluoroelastomer (A) comprises cure sites; the selection of cure sites is not particularly critical, provided that they ensure adequate reactive in curing.

The fluoroelastomer (A) can comprise said cure sites either as pendant groups bonded to certain recurring units or as end groups of the polymer chain.

Among cure-site containing recurring units, mention can be notably made of : (CSM-1) halogen (chlorine, iodine or bromine, preferably iodine or bromine) containing monomers of formula: 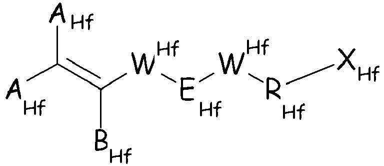 wherein each of A_{Hf}, equal to or different from each other and at each occurrence, is independently selected from F, Cl, and H; B_{Hf} is any of F, Cl, H and OR^{Hf}_{B}, wherein R^{Hf}_{B} is a branched or straight chain alkyl radical which can be partially, substantially or completely fluorinated or chlorinated; each of W^{Hf} equal to or different from each other and at each occurrence, is independently a covalent bond or an oxygen atom; E_{Hf} is a divalent group having 2 to 10 carbon atom, optionally fluorinated; R_{Hf} is a branched or straight chain alkyl radical, which can be partially, substantially or completely fluorinated, which may be inserted with ether linkages; preferably E is a -(CF₂)ₘ- group, with m being an integer from 3 to 5; and X_{Hf} is a halogen atom selected from the group consisting of Chlorine, Iodine and Bromine, preferably selected from the group consisting of Iodine and Bromine;
(CSM-2) ethylenically unsaturated compounds comprising cyanide groups, possibly fluorinated.

Among cure-site containing monomers of type (CSM1), preferred monomers are those selected from the group consisting of:
(CSM1-A) iodine-containing perfluorovinylethers of formula: 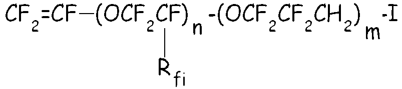 with m being an integer from 0 to 5 and n being an integer from 0 to 3, with the provisio that at least one of m and n is different from 0, and R_{fi} being F or CF₃; (as notably described in patents US 4745165 (AUSIMONT SPA ) 17/05/1988 , US 4564662 (MINNESOTA MINING ) 14/01/1986 and EP 199138 A (DAIKIN IND LTD ) 29/10/1986 ); and
(CSM-1B) iodine-containing ethylenically unsaturated compounds of formula:

   CX¹X²=CX³-(CF₂CF₂)ₚ-I

   wherein each of X¹, X² and X³, equal to or different from each other, are independently H or F; and p is an integer from 1 to 5; among these compounds, mention can be made of CH₂=CHCF₂CF₂I, I(CF₂CF₂)₂CH=CH₂, ICF₂CF₂CF=CH₂, I(CF₂CF₂)₂CF=CH₂;
(CSM-1C) iodine-containing ethylenically unsaturated compounds of formula:

   CHR=CH-Z-CH₂CHR-I

   wherein R is H or CH₃, Z is a C₁-C₁₈ (per)fluoroalkylene radical, linear or branched, optionally containing one or more ether oxygen atoms, or a (per)fluoropolyoxyalkylene radical; among these compounds, mention can be made of CH₂=CH-(CF₂)₄CH₂CH₂I, CH₂=CH-(CF₂)₆CH₂CH₂I, CH₂=CH-(CF₂)₈CH₂CH₂I, CH₂=CH-(CF₂)₂CH₂CH₂I;
(CSM-1D) bromo and/or iodo alpha-olefins containing from 2 to 10 carbon atoms such as bromotrifluoroethylene or bromotetrafluorobutene described, for example, in US 4035565 (DU PONT ) 12/07/1977 or other compounds bromo and/or iodo alpha-olefins disclosed in US 4694045 (DU PONT) 15/09/1987 .

Among cure-site containing monomers of type (CSM2), preferred monomers are those selected from the group consisting of:
(CSM2-A) perfluorovinyl ethers containing cyanide groups of formula CF₂=CF-(OCF₂CFX^{CN})ₘ-O-(CF₂)ₙ-CN, with X^{CN} being F or CF₃, m being 0, 1, 2, 3 or 4; n being an integer from 1 to 12;
(CSM2-B) perfluorovinyl ethers containing cyanide groups of formula CF₂=CF-(OCF₂CFX^{CN})_{m'}-O-CF₂-CF(CF₃)-CN, with X^{CN} being F or CF₃, m' being 0, 1, 2, 3 or 4.

Specific examples of cure-site containing monomers of type CSM2-A and CSM2-B suitable to the purposes of the present invention are notably those described in patents US 4281092 (DU PONT ) 28/07/1981 , US 4281092(DU PONT ) 28/07/1981 , US 5447993(DU PONT ) 5/09/1995 and US5789489 (DU PONT ) 4/08/1998 .

Preferably, fluoroelastomer (A) of the invention comprises at least one of chlorine, iodine and bromine cure sites (more preferably iodine and/or bromine), in an amount such that the chloride, iodine and bromine content in the fluoroelastomer (A) is of 0.001 to 10% wt, with respect to the total weight of fluoroeastomer (A). Among these, iodine cure sites are those selected for maximizing curing rate, so that fluoroelastomers (A) comprising iodine cure-sites are preferred.

According to this embodiment, for ensuring acceptable reactivity it is generally understood that iodine and/or bromine are preferred and that the content of iodine and/or bromine in the fluoroelastomer (A) should be of at least 0.05 % wt, preferably of at least 0.1 % weight, more preferably of at least 0.15 % weight, with respect to the total weight of fluoroelastomer (A).

On the other side, amounts of iodine and/or bromine not exceeding preferably 7 % wt, more specifically not exceeding 5 % wt, or even not exceeding 4 % wt, with respect to the total weight of fluoroelastomer (A), are those generally selected for avoiding side reactions and/or detrimental effects on thermal stability.

These iodine or bromine cure sites of these preferred embodiments of the invention might be comprised as pending groups bound to the backbone of the fluoroelastomer (A) polymer chain (by means of incorporation in the fluoroelastomer (A) chain of recurring units derived from monomers of (CSM-1) type, as above described, and preferably of monomers of (CSM-1A) to (CSM1-D), as above detailed) or might be comprised as terminal groups of said polymer chain.

According to a first embodiment, the iodine and/or bromine cure sites are comprised as pending groups bound to the backbone of the fluoroelastomer polymer chain. The fluoroelastomer according to this embodiment generally comprises recurring units derived from iodine or bromine containing monomers (CSM-1) in amounts of 0.05 to 5 mol per 100 mol of all other recurring units of the fluoroelastomer (A), so as to advantageously ensure above mentioned iodine and/or bromine weight content.

According to a second preferred embodiment, the iodine and/or bromine cure sites are comprised as terminal groups of the fluoroelastomer (A) polymer chain; the fluoroelastomer according to this embodiment is generally obtained by addition to the polymerization medium during fluoroelastomer manufacture of anyone of:
- iodinated and/or brominated chain-transfer agent(s); suitable chain-chain transfer agents are typically those of formula R_{F}(I)ₓ(Br)_{y}, in which R_{f} is a (per)fluoroalkyl or a (per)fluorochloroalkyl containing from 1 to 8 carbon atoms, while x and y are integers between 0 and 2, with 1 ≤ x+y ≤ 2 (see, for example, patents US4243770 (DAIKIN IND LTD ) 6/01/1981 and US 4943622 (NIPPON MEKTRON KK ) 24/07/1990 ); and
- alkali metal or alkaline-earth metal iodides and/or bromides, such as described notably in patent US5173553 (AUSIMONT SRL) 22/12/1992 .

### The polymer (PAI)

To the purpose of the present invention, the term "aromatic polyamide-imide polymer [polymer (PAI)]" is intended to denote any polymer comprising more than 50% by moles of recurring units comprising at least one aromatic ring, at least one imide group, as such and/or in its amic acid form, and at least one amide group which is not included in the amic acid form of an imide group [recurring units (R_{PAI})].

The recurring units (R_{PAI}) are advantageously selected from the group consisting of units of any of formulae (R_{PAI}-a) and (R_{PAI}-b): 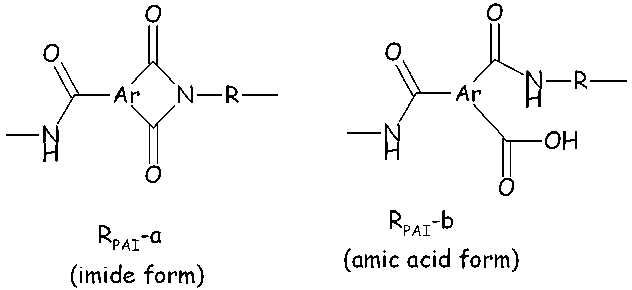 wherein:
- Ar is a trivalent aromatic group; typically Ar is selected from the group consisting of the following
   structures: 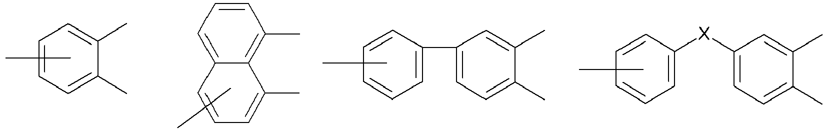 and corresponding optionally substituted structures, with X being -O-,-C(O)-, -CH₂-, -C(CF₃)₂-, -(CF₂)ₙ-, with n being an integer from 1 to 5;
- R is a divalent aromatic group; typically R is selected from the group consisting of the following structures: 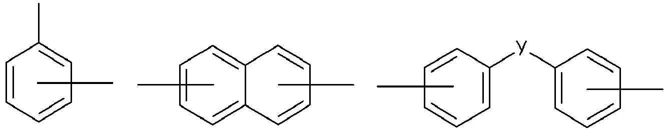 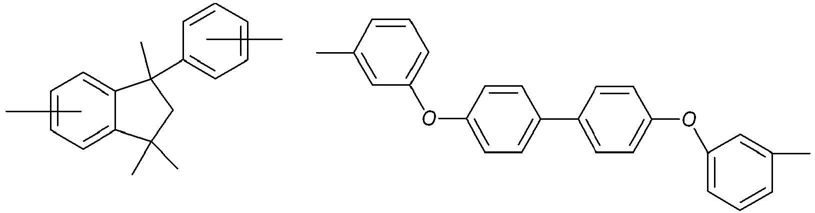 and corresponding optionally substituted structures, with Y being -O-, -S-, -SO₂-, -CH₂-, -C(O)-, -C(CF₃)₂-, -(CF₂)ₙ, n being an integer from 0 to 5.

Preferably, the polymer (PAI) comprises more than 50% by moles of recurring units (R_{PAI}) comprising an imide group wherein the imide group is present as such, like in recurring units (R_{PAI}-a), and/or in its amic acid form, like in recurring units (R_{PAI}-b), with respect to the total number of moles of recurring units of polymer (PAI).

Recurring units (R_{PAI}) are preferably selected from recurring units (I), (m) and (n), in their amide-imide (a) or amide-amic acid (b) forms: (I) 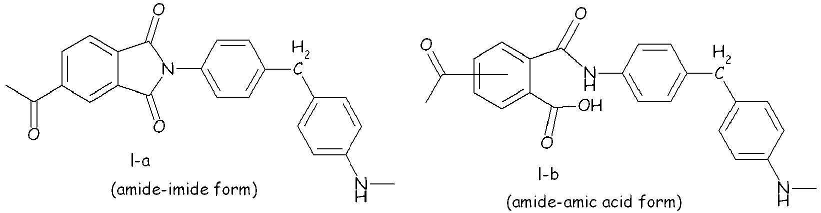 wherein the attachment of the two amide groups to the aromatic ring as shown in (I-b) will be understood to represent the 1,3 and the 1,4 polyamide-amic acid configurations;
(m) 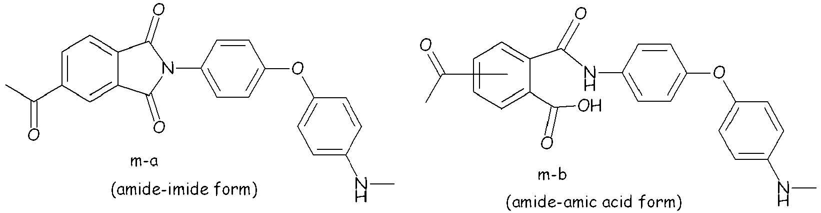 wherein the attachment of the two amide groups to the aromatic ring as shown in (m-b) will be understood to represent the 1,3 and the 1,4 polyamide-amic acid configurations; and
(n) 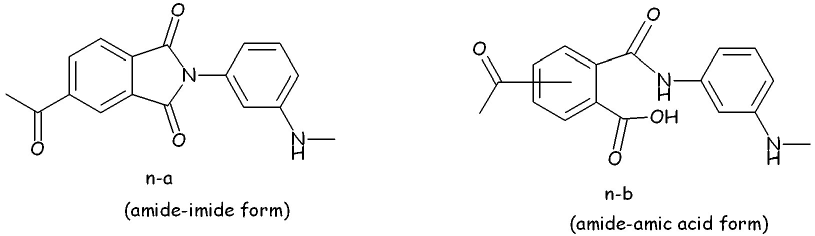 wherein the attachment of the two amide groups to the aromatic ring as shown in (n-b) will be understood to represent the 1,3 and the 1,4 polyamide-amic acid configurations.

Very preferably, the polymer (PAI) comprises more than 90% by moles of recurring units (R_{PAI}). Still more preferably, it contains no recurring unit other than recurring units (R_{PAI}). Polymers (PAI) are notably commercialized by Solvay Specialty Polymers USA, L.L.C. under the trademark name TORLON^{®}.

The composition (C) comprises said polymer (PAI) in an amount of at least 0.5 phr, preferably at least 1.0 phr, more preferably at least 2.0 phr, and at most 30.0 phr, preferably at most 25.0 phr, more preferably at most 18.0 phr, with respect to the fluoroelastomer (A).

### The cross-linking system

The composition (C) comprises at least one cross-linking system, which is able to promote the curing of the fluoroelastomer (A).

According to certain embodiments, the said at least one cross-linking system is a peroxide-based cross-linking system comprising at least one organic peroxide [peroxide (O)] and at least one one polyunsaturated compound [compound (U)].

The composition (C) according to this embodiment hence comprises at least an organic peroxide [peroxide (O)]; the choice of the said peroxide (O) is not particularly critical provided that the same is capable of generating radicals with the assistance of a transition metal catalyst. Among most commonly used peroxides, mention can be made of:
- di(alkyl/alryl) peroxides, including for instance di-tert-butyl peroxide, 2,5-dimethyl-2,5-bis(tert-butylperoxy)hexane, di(t-butylperoxyisopropyl)benzene, dicumyl peroxide;
- diacyl peroxides, including dibenzoyl peroxide, disuccinic acid peroxide, di(4-methylbenzoyl)peroxide, di(2,4-dichlorobenzoyl)peroxide, dilauroyl peroxide, decanoyl peroxide;
- percarboxylic acids and esters, including di-tert-butyl perbenzoate, t-butylperoxy-2-ethylhexanoate, 1,1,3,3-tetramethylethylbutyl peroxy-2-ethylhexanoate, 2,5-dimethyl-2,5-di(2-ethylhexanoylperoxy)hexane;
- peroxycarbonates including notably di(4-t-butylcyclohexyl)peroxydicarbonate, di(2-phenoxyethyl)peroxydicarbonate, bis[1,3-dimethyl-3-(tert-butylperoxy)butyl] carbonate, t-hexylperoxyisoproprylcarbonate, t-butylperoxyisopropylcarbonate,
- perketals such as 1, 1-bis(tert-butylperoxy)cyclohexane and 2, 2-bis(tertbutylperoxy)butane;
- ketone peroxides such as cyclohexanone peroxide and acetyl acetone peroxide;
- organic hydroperoxides such as cumene hydroperoxide, tert-butyl hydroperoxide, methylethylketone peroxide (otherwise referred to as 2-[(2-hydroperoxybutan-2-yl)peroxy]butane-2-peroxol) and pinane hydroperoxide;
- oil-soluble azo initiators such as 2, 2'-azobis (4-methoxy-2. 4-dimethyl valeronitrile), 2, 2'-azobis (2.4-dimethyl valeronitrile), 2,2'-azobis(isobutyronitrile), 2, 2'-azobis(2-cyano-2-butane), dimethyl-2, 2'-azobisdimethyli sobutyrate, dimethyl-2,2'-azobis(2-methylpropionate), 2,2'-azobis(2-methylbutyronitrile), 1,1'-azobis(cyclohexane-I-carbonitrile), 2, 2'-azobis[N-(2-propenyl)-2-methylpropionamide], 1-[(1 -cyano-1-methyl ethyl)azo]formamide, 2, 2'-azobis(N-cyclohexy1-2-methylpropionamide), 2,2'-azobis(i sobutyronitrile), 2,2'-azobis(2-cyano-2-butane), dimethyl-2,2'-azobisdimethylisobutyrate, 1,1'-azobis(cyclohexanecarbonitrile), 2-(t-butylazo)-2-cyanopropane, 2,2'-azobis[2-methyl-N-(1, 1)-bis(hydroxymethyl)-2-hydroxyethyl]propionamide, 2, 2'-azobis[2-methyl-N-hydroxyethyl]-proprionamide, 2, 2'-azobis(N, N'-dimethyleneisobutyramine), 2, 2'-azobis(2-methyl-N-[1,1-bis(hydroxymethyl)-2-hydroxyethyl] propionamide), 2,2'-azobis(2-methyl-N-[1,1-bis(hydroxymethyl) ethyl] proprionamide), 2, 2'-azobis[2-5 methyl-N-(2-hydroxyethyl) propionamide], 2,2'-azobis(isobutyramide) dihydrate, 2,2'-azobis(2, 2, 4-trimethylpentane), 2, 2'-azobis(2-methylpropane).

Other suitable peroxide systems are those described, notably, in patent applications EP136596 A (MONTEDISON SPA ) 10/04/1985 and EP 410351 A (AUSIMONT SRL ) 30/01/1991 , whose content is hereby incorporated by reference.

Choice of the most appropriate peroxide depending upon curing conditions (time, temperature) will be done by one of ordinary skills in the art considering notably ten-hours half time temperature of the peroxide (O).

The amount of peroxide (O) in the composition (C) of this embodiment is generally of 0.1 to 15 phr, preferably of 0.2 to 12 phr, more preferably of 1.0 to 7.0 phr, relative to 100 weight parts of fluoroelastomer (A).

As said, the composition (C) of this embodiment comprises at least one polyunsaturated compound or compound (U). The expression " polyunsaturated compound" is hereby intended to designate a compound comprising more than one carbon-carbon unsaturation.

The composition (C) may comprise one or more than one compound (U), as above detailed.

Compounds (U) may be selected from compounds comprising two carbon-carbon unsaturations, compounds comprising three carbon-carbon unsaturations and compounds comprising four or more than four carbon-carbon unsaturations.

Among compounds (U) comprising two carbon-carbon unsaturations, mention can be made of bis-olefins [bis-olefin (OF)], as above detailed, preferably selected from those complying with any of formulae (OF-1), (OF-2) and (OF-3), as above detailed.

Among compounds (U) comprising three carbon-carbon unsaturations, mention can be made of:
- tri-substuituted cyanurate compounds of general formula:Among compounds (U) comprising three carbon-carbon unsaturations, mention can be made of:
- tri-substuituted cyanurate compounds of general formula: 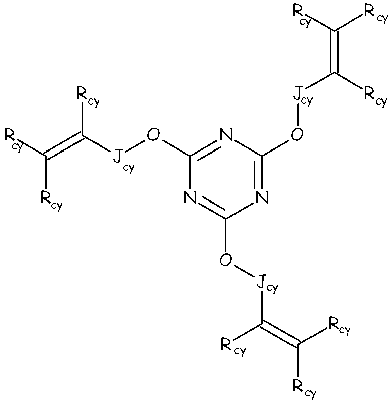 wherein each of R_{cy}, equal to or different from each other and at each occurrence, is independently selected from H or a group -R_{rcy} or -OR_{rcy}, with R_{rcy} being C₁-C₅ alkyl, possibly comprising halogen(s), and each of J_{cy}, equal to or different from each other and at each occurrence, is independently selected from a bond or a divalent hydrocarbon group, optionally comprising heteroatoms; tri-substuituted cyanurate compounds include notably preferred triallyl cyanurate, trivinyl cyanurate;
- tri-substuituted isocyanurate compounds of general formula: 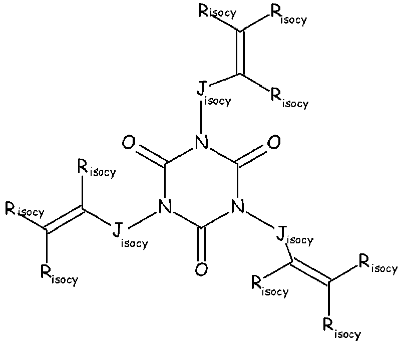 wherein each of R_{isocy}, equal to or different from each other and at each occurrence, is independently selected from H or a group -R_{risocy} or -OR_{risocy}, with R_{risocy} being C₁-C₅ alkyl, possibly comprising halogen(s), and each of J_{isocy}, equal to or different from each other and at each occurrence, is independently selected from a bond or a divalent hydrocarbon group, optionally comprising heteroatoms;
   tri-substuituted isocyanurate compounds include notably preferred triallyl isocyanurate (otherwise referred to as "TAIC"), trivinyl isocyanurate, with TAIC being the most preferred;
- tri-substituted triazine compounds of general formula: 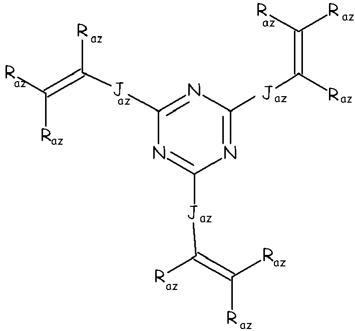 wherein each of R_{az}, equal to or different from each other and at each occurrence, is independently selected from H or a group -Rraz or-ORraz, with Rraz being C₁-C₅ alkyl, possibly comprising halogen(s), and each of J_{az}, equal to or different from each other and at each occurrence, is independently selected from a bond or a divalent hydrocarbon group, optionally comprising heteroatoms; tri-substituted triazine compounds
   include notably compounds disclosed in EP 0860436 A (AUSIMONT SPA) 26/08/1998 and in WO 97/05122 (DU PONT) 13/02/1997 ;
- tri-substituted phosphite compounds of general formula: 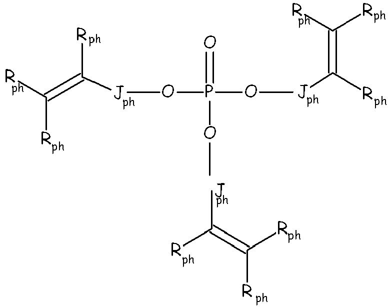 wherein each of Rₚₕ, equal to or different from each other and at each occurrence, is independently selected from H or a group -Rᵣₚₕ or -ORᵣₚₕ, with Rᵣₚₕ being C₁-C₅ alkyl, possibly comprising halogen(s), and each of Jₚₕ, equal to or different from each other and at each occurrence, is independently selected from a bond or a divalent hydrocarbon group, optionally comprising heteroatoms; tri-substituted phosphite compounds
   include notably preferred tri-allyl phosphite;
- tri-substituted alkyltrisiloxanes of general formula: 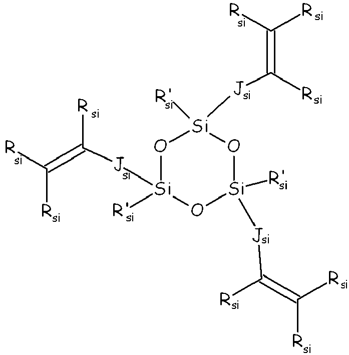 wherein each of Rₛᵢ, equal to or different from each other and at each occurrence, is independently selected from H or a group -Rᵣₛᵢ or -ORᵣₛᵢ, with Rᵣₛᵢ being C₁-C₅ alkyl, possibly comprising halogen(s), each of R'ₛᵢ, equal to or different from each other and at each occurrence, is independently selected from C₁-C₅ alkyl groups, possibly comprising halogen(s), and each of Jₛᵢ, equal to or different from each other and at each occurrence, is independently selected from a bond or a divalent hydrocarbon group, optionally comprising heteroatoms; tri-substituted alkyltrisiloxanes compounds include notably preferred 2,4,6-trivinyl methyltrisiloxane and 2,4,6-trivinyl ethyltrisiloxane;
- N,N-disubstituted acrylamide compounds of general formula: 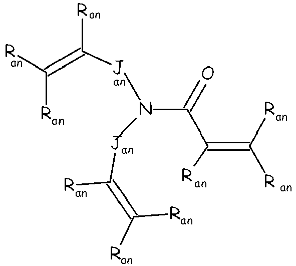 wherein each of Rₐₙ, equal to or different from each other and at each occurrence, is independently selected from H or a group -Rran or-ORran, with Rran being C₁-C₅ alkyl, possibly comprising halogen(s), and each of Jₐₙ, equal to or different from each other and at each occurrence, is independently selected from a bond or a divalent hydrocarbon group, optionally comprising heteroatoms; N,N-disubstituted acrylamide compounds include notably preferred N,N-diallylacrylamide.

Among compounds (U) comprising four or more carbon-carbon unsaturations, mention can be made of tris(diallylamine)-s-triazine of formula 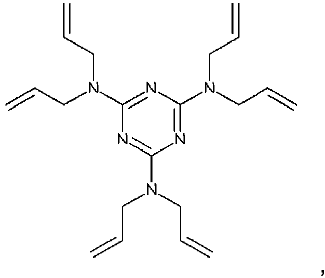 hexa-allylphosphoramide, N,N,N',N'-tetra-allyl terephthalamide, N,N,N',N'-tetra-allyl malonamide.

It is generally preferred for the compound (U) to be selected from the group consisting of (i) olefins (OF), as above detailed, in particular olefins of (OF-1) type; and (ii) tri-substuituted isocyanurate compounds, as above detailed, in particular TAIC.

The amount of the compound (U) ranges normally from 0.1 to 20 weight parts per 100 parts by weight (phr) of fluoroelastomer (A), preferably from 1 to 15 weight parts per 100 parts by weight of fluoroelastomer (A), more preferably from 1 to 10 weight parts per 100 parts by weight of fluoroelastomer (A).

The composition (C) of this embodiment may further additionally comprise ingredients which maybe commonly used for the peroxide curing of fluoroelastomers; more specifically, composition (C) may generally further comprise
(a) one or more than one metallic basic compound, in amounts generally of from 0.5 to 15.0 phr, and preferably of from 1 to 10 phr, more preferably 1 to 5 phr, relative to 100 weight parts of fluoroelastomer (A); metallic basic compounds are generally selected from the group consisting of (j) oxides or hydroxides of divalent metals, for instance oxides or hydroxides of Mg, Zn, Ca or Pb, and (jj) metal salts of a weak acid, for instance Ba, Na, K, Pb, Ca stearates, benzoates, carbonates, oxalates or phosphites;
(b) one or more than one acid acceptor which is not a metallic basic compound, in amounts generally of from 0.5 to 15.0 phr, and preferably of from 1 to 10.0 phr, more preferably 1 to 5 phr, relative to 100 weight parts of fluoroelastomer (A); these acid acceptors are generally selected from nitrogen-containing organic compounds, such as 1,8-bis(dimethylamino)naphthalene, octadecylamine, etc., as notably described in EP708797 A (DU PONT ) 1/05/1996 .

According to other embodiments, the said at least one cross-linking system is a ionic-based cross-linking system comprising at least one polyhydroxylated compound, at least one accelerant, and at least one basic metal oxide.

As said, the composition according to this second embodiment comprises at least one polyhydroxylated compounds. Aromatic or aliphatic polyhydroxylated compounds, or derivatives thereof, may be used ; examples thereof are described, notably, in EP 335705 A (MINNESOTA MINING) 4/10/1989 and US 4233427 (RHONE POULENC IND) 11/11/1980 . Among these, mention will be made in particular of dihydroxy, trihydroxy and tetrahydroxy benzenes, naphthalenes or anthracenes; bisphenols of formula (B): 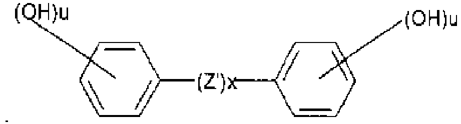 wherein:
- Z' is selected from the group consisting of bivalent C₁-C₁₃ alkyl or alkylidene group, C₄-C₁₃ cycloaliphatic, C₆-C₁₃ aromatic or arylalkylenic groups, optionally substituted with at least one chlorine or fluorine atom; a thio (-S-), oxy (-O-), carbonyl (-C(O)-), sulphinyl (-S(O)-) and sulphonyl group (-SO₂-);
- x is 0 or 1;
- u, equal to or different from each other, is independently at each occurrence an integer of at least 1, preferably 1 or 2;
- and wherein the phenyl rings can be optionally substituted by one or more substituents selected from the group consisting of chlorine, fluorine, bromine; -CHO, C₁-C₈ alkoxy groups, -COOR₁₀ groups, wherein R₁₀ is H or C₁-C₈ alkyl, C₆-C₁₄ aryl, C₄-C₁₂ cycloalkyl.

When Z' is a C₁-C₁₃ divalent alkyl group, it can be for example methylene, ethylene, chloroethylene, fluoroethylene, difluoroethylene, 1,3-propylene, tetramethylene, chlorotetramethylene, fluorotetramethylene, trifluorotetramethylene, 2-methyl-1,3-propylene, 2-methyl-1,2-propylene, pentamethylene, hexamethylene.

When Z' is a C₁-C₁₃ divalent alkylidene group, it can be for example ethylidene, dichloroethylidene, difluoroethylidene, propylidene, isopropylidene, trifluoroisopropylidene, hexafluoroisopropylidene, butylidene, heptachlorobutylidene, heptafluorobutylidene, pentylidene, hexylidene, 1,1-cyclohexylidene.

When Z' is C₄-C₁₃ cycloaliphatic group, it can be for example 1,4-cyclohexylene, 2-chloro-1,4-cyclohexylene, 2-fluoro-1,4-cyclohexylene, 1,3-cyclohexylene, cyclopentylene, chlorocyclopentylene, fluorocyclopentylene, and cycloheptylene.

When Z' is a C₆-C₁₃ aromatic or arylalkylenic group, it can be for example m-phenylene, p-phenylene, 2-chloro-1,4-phenylene, 2-fluoro-1,4-phenylene, o-phenylene, methyl phenylene, dimethylphenylene, trimethylphenylene, tetramethyl phenylene, 1,4-naphthylene, 3-fluoro-1,4-naphthylene, 5-chloro-1,4-naphthylene, 1,5-naphtylene and 2,6-naphthylene.

Among the polyhydroxylated curing agents of formula (B), hexafluoroisopropylidene bis (4-hydroxybenzene), known as bisphenol AF, 4,4'-dihydroxydiphenyl sulphone and isopropylidene bis (4-hydroxybenzene), known as bisphenol A, are preferred, with Bisphenol AF being particularly preferred.

Other polyhydroxylic curing agents are dihydroxy benzenes selected from the group consisting of catechol, resorcinol, 2-methyl resorcinol, 5-methyl resorcinol, hydroquinone, 2-methyl hydroquinone, 2,5-dimethyl hydroquinone, 2-t-butyl hydroquinone, and dihydroxy naphthalenes, in particular1,5-dehydroxynaphthalene.

It is also understood that derivatives of aforementioned aromatic or aliphatic polyhydroxylated compounds can be used; mention can be notably made of metal salts formed by the anion of said aromatic or aliphatic polyhydroxylated compounds wherein one or more of the hydroxyl group has been deprotonated, with one or more than one cation (as required for reaching neutrality) of a metal, typically of an alkaline or alkaline earth metal; examples thereof are notably the dipotassic salt of bisphenol AF and the monosodic monopotassic salt of bisphenol AF.

Further in addition, -onium hydroxylates, i.e. salts formed by the anion of said aromatic or aliphatic polyhydroxylated compounds wherein one or more of the hydroxyl group has been deprotonated, with one or more - onium cation can also be used. As cations, all the cations corresponding to the -onium organic derivatives accelerant components can be used.

The amount of the polydroxylated compound is generally of at least 0.5 phr, preferably at least 1 phr, and/or generally at most 15 phr, preferably at most 10 phr, with respect to the fluoroelastomer (A) weight.

The composition (C) according to this second embodiment comprises at least one accelerant; accelerants for ionic curing of fluoroelastomers are well known in the art.

The accelerants suitable in the composition of the present invention are generally selected from the group consisting of organic onium compounds, amino-phosphonium derivatives, phosphoranes, imine compounds.

Organic onium compounds which are suitable in the composition of the invention generally comply with formula (O):

{[R¹R²R³R⁴Q]⁺}ₙXₗⁿ⁻

wherein:
- Q is selected from the group consisting of nitrogen, phosphor, arsenic, antimony, sulphur; preferably phosphor or nitrogen;
- Xₗ is an organic or inorganic anion, preferably selected from the group consisting of halides, sulphate, acetate, phosphate, phosphonate, hydroxide, alkoxide, phenate, bisphenate;
- n is the valence of the Xₗ anion;
- each of R², R³, R⁴, R⁵, equal to or different from each other, is independently the one from the other selected from the group consisting of:
   a C₁-C₂₀ alkyl group, a C₆-C₂₀ aryl group, a C₆-C₂₀ arylalkyl group, a C₁-C₂₀ alkenyl group;
   a halogen selected from chlorine, fluorine, bromine;
   a cyano group, a group of formula -OR_{B} or -COOR_{B}, wherein R_{B} is an alkyl, aryl, arylalkyl or alkenyl; wherein two groups selected from R², R³, R⁴, R⁵ may form with Q a cyclic structure;
   with the provisio that when Q is a sulphur atom one of the R², R³, R⁴, R⁵ radicals is not present.

Amino-phosphonium derivatives which are suitable for use in composition (C) of this second embodiment generally comply with formula (AP-1) or (AP-2):

{[P(NR⁶R⁷)ₙR⁸₄₋ₙ]⁺}_{q}Y^{q-} (AP-1)

{[R⁸₃₋ᵣ(NR⁶R⁷)ᵣP-E-P(NR⁶R⁷)ᵣR⁸₃₋ᵣ]²⁺}{Y^{q-}}_{2/q} (AP-2)

wherein:
- each of R⁶, R⁷ and R⁸, equal to or different from each other, is independently selected from the group consisting of:
   C₁-C₁₈ alkyl group (preferably C₁-C₁₂ alkyl group); C₄-C₇ cycloalkyl group; C₆-C₁₈ aryl group (preferably C₆-C₁₂ aryl group); C₆-C₁₈ arylalkyl group (preferably C₆-C₁₂ arylalkyl group);
   C₁-C₁₈ oxyalkyl group comprising one or more than one hydroxyl or oxygen ethereal group;
   and wherein R⁶, R⁷ and R⁸ can optionally contain halogens, CN, OH, carbalkoxy groups; wherein R⁶ and R⁷ can form with the nitrogen atom an heterocyclic ring;
- E is a C₁-C₆ divalent alkylenic, oxyalkylenic or C₆-C₁₂ arylenic radical;
- n is an integer from 1 to 4;
- r is an integer from 1 to 3;
- q is the valence of the anion Y, and is preferably an integer from 1 to 2;
- Y is an organic or inorganic anion having valence q; Y can be selected from halides, perchlorate, nitrate, tetrafluoroborate, hexafluorophosphate, oxalate, acetate, stearate, haloacetate, para-toluensulphonate, phenate, bisphenate, hydroxide; Y can also be a complex anion for example ZnCl₄²⁻, CdCl₄²⁻, NiBr₄²⁻, HgI₃⁻.

Phosphoranes which are suitable in the composition (C) of this second embodiment generally comply with formula (P): 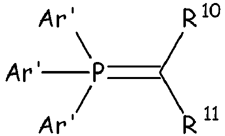 wherein:
- each of Ar', equal to or different from each other, is a optionally substituted aryl group, preferably an optionally substituted phenyl group or an optionally substituted naphthyl group;
- each of R¹⁰ and R¹¹, equal to or different from each other, is independently selected from the group consisting of -H, -CN, C₁-C₈ alkyl,-O-C(O)-R¹² group, -C(O)-R¹² group, -NR¹³-C(O)-R¹² group, with R¹² being a C₁-C₆ (cyclo)alkyl group, and R¹³ being H or a C₁-C₆ (cyclo)alkyl group, R¹⁰ and R¹¹ possibly forming together with the carbon atom of the P=C bond a cyclic group.

Imine compounds which are suitable in the composition (C) of this second embodiment generally comply with formula (I) :

[(R¹⁴)₃P=N=P(R¹⁴)₃]⁺}_{z}X^{z-} (I)

wherein:
- R¹⁴, equal to or different from each other at each occurrence, is selected from the group consisting of C₁-C₁₂ hydrocarbon groups, optionally comprising one or more than one group including a heteroatom selected from the group consisting of O, N, S, halogen;
- X is an anion of valence z, with z being an integer, generally 1 or 2.

Examples of accelerants that may be used include: quaternary ammonium or phosphonium salts as notably described in EP 335705 A (MINNESOTA MINING) 4/10/1989 and US3876654(DUPONT) 8/04/1975 ; aminophosphonium salts as notably described in US4259463 (MONTEDISON SPA) 31/03/1981 ; phosphoranes as notably described in US 3752787(DUPONT) 14/08/1973 ; imine compounds as described in EP 0120462A (MONTEDISON SPA) 3/10/1984 or as described in EP 0182299A (ASAHI CHEMICAL) 28/05/1986 . Quaternary phosphonium salts and aminophosphonium salts are preferred, and more preferably salts of tetrabutylphosphonium, tetrabutyl ammonium, and of 1,1-diphenyl-1-benzyl-N-diethyl-phosphoramine of formula:

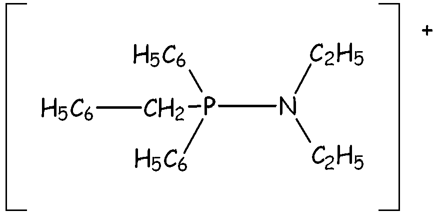

Instead of using the accelerator and the polyhydroxylated compound separately, it is also possible to use an adduct between an accelerant and a polyhydroxylated compound in a mole ratio of from 1:2 to 1:5 and preferably from 1:3 to 1:5. In said adducts, the cation is hence represented by the positively charged moiety of any of the accelerants selected from the group consisting of organic onium compounds, amino-phosphonium derivatives, and imine compounds as listed above, and the anion is represented by the said polyhydroxylated curing agent, wherein one or more of the hydroxyl group has been deprotonated.

The adducts between the accelerant and the polyhydroxylated curing agent is generally obtained by melting the product of reaction between the accelerator and the curing agent in the indicated mole ratios, or by melting the mixture of the 1:1 adduct supplemented with the curing agent in the indicated amounts. Optionally, an excess of the accelerator, relative to that contained in the adduct, may also be present.

The following are particularly preferred as cations for the preparation of the adduct: 1,1-diphenyl-1-benzyl-N-diethylphosphoramine and tetrabutylphosphonium; particularly preferred anions are those derived from bisphenol compounds in which the two aromatic rings are bonded via a divalent radical chosen from perfluoroalkyl groups of 3 to 7 carbon atoms, and the OH groups are in the para position. A method suitable for the preparation of an adduct as above described is described in European patent application EP0684277A (AUSIMONT SPA) 29/11/1995 , which is included herein in its entirety by reference.

The amount of the accelerant in the composition (C) according to this second embodiment is generally of at least 0.05 phr, preferably at least 0.1 phr, and/or generally at most 10 phr, preferably at most 5 phr, with respect to the fluoroelastomer (A) weight.

The composition (C) according to this second embodiment comprises at least one basic metal oxide, which is generally selected from the group consisting of divalent metal oxides.

Among said metal oxides of divalent metals, mention can be notably made of ZnO, MgO, PbO, and their mixtures, with MgO being preferred.

The amount of the basic metal oxide is generally of at least 0.5 phr, preferably at least 1 phr, and/or generally at most 25 phr, preferably at most 15 phr, more preferably at most 10 phr, with respect to the fluoroelastomer (A) weight.

The composition (C) according to this second embodiment optionally comprises at least one metal hydroxide, with the provision that if said metal hydroxide is present, its amount is preferably below 6 phr, more preferably below 3 phr based on 100 weight parts of fluoroelastomer (A).

Hydroxides which can be used are generally selected from the group consisting of Ca(OH)₂, Sr(OH)₂, Ba(OH)₂.

It is generally understood that performances of the composition (C) of this second embodiment can be optimized wherein the amount of metal hydroxide(s) is advantageously below 2.5 phr, preferably below 2 phr, more preferably below 1 phr, including when no metal hydroxide(s) is used, based on 100 weight parts of fluoroelastomer (A).

Whichever is the crosslinking system comprised in the composition (C), other conventional additives, such as fillers, thickeners, pigments, antioxidants, stabilizers, processing aids/plasticizers, and the like may be present. Carbon black is often used as an advantageous reinforcing system.

As said, the composition (C) may include at least one plasticizer (P), generally selected from those known for fluororubbers. Plasticizers (P) will be generally selected among ester-based plasticizers, such as glutarates (e.g. Diisodecyl glutarate), adipates (e.g. Bis(2-ethylhexyl)adipate, dimethyl adipate, monomethyl adipate, dioctyl adipate, Dibutoxyethoxyethyl adipate, Dibutoxyethyl adipate, Diisodecyl adipate), maleates (e.g. dibutyl maleate; diisobutyl maleate), azelates, sebacates (e.g. dibutyl sebacate, Di-2-ethylhexyl sebacate), trimellitates (e.g. tri-2-ethylhexyl trimellitate), citrates (e.g. triethyl citrate, tributyl citrate, acetyltriethylcitrate, acetyl tributyl citrate, trioctyl citrate, acetyl trioctyl citrate, trihexyl citrate, acetyl trihexyl citrate), phosphate esters (e.g. triethyl phosphate, tributyl phosphate, trioctyl phosphate).

The invention further pertains to a process for the manufacture of composition (C), as above detailed, said method comprising mixing:
- the fluoroelastomer (A);
- the cross-linking system; and
- the polymer (PAI).

Still, the invention pertains to a method for fabricating shaped articles comprising curing the composition (C), as above described.

The composition (C) can be fabricated, e.g. by moulding (injection moulding, extrusion moulding), calendering, coating, screen-printing, forming-in-place, into the desired shaped article, which is advantageously subjected to vulcanization (curing) during the processing itself and/or in a subsequent step (post-treatment or post-cure), advantageously transforming the relatively soft, weak, fluoroelastomeric uncured composition into a finished article made of non-tacky, strong, insoluble, chemically and thermally resistant cured fluoroelastomer material.

Yet, the invention pertains to cured articles obtained from the composition (C), as above detailed. Said cured articles are generally obtained by moulding and curing the fluoroelastomer composition, as above detailed. These cured articles may be sealing articles, including O(square)-rings, packings, gaskets, diaphragms, shaft seals, valve stem seals, piston rings, crankshaft seals, cam shaft seals, and oil seals or maybe piping and tubings, in particular flexible hoses or other items, including conduits for delivery of hydrocarbon fluids and fuels.

Finally, the invention further pertains to assemblies including a substrate and at least one cured article, as above detailed.

The choice of substrate is not particularly limited: the composition (C) of the invention is such to ensure adhesion to a variety of metal and non-metal substrates, including notably plastic and rubber substrates, among which polyamide substrates, silicone substrates can be notably mentioned.

The assemblies of the invention are generally manufactured by contacting the composition (C), as above detailed, with a substrate, and subjecting the said composition (C) to vulcanization (curing) while in contact with the said substrate, and optionally exposing the assembly to a subsequent thermal treatment step (post-treatment or post-cure).

Should the disclosure of any of the patents, patent applications, and publications that are incorporated herein by reference conflict with the present description to the extent that it might render a term unclear, the present description shall take precedence.

The present invention will be now described in more detail with reference to the following examples, whose purpose is merely illustrative and not limitative of the scope of the invention.

### EXAMPLES

### Raw materials

Tecnoflon^{®} P X647 is an iodine-containing peroxide curable fluoroelastomer commercially available from Solvay Specialty Polymers Italy, SpA.

VAROX^{®} DBPH-50 is 2,5-dimethyl-2,5-di (t-butylperoxy)-hexane, available from R. T. Vanderbilt, Norwalk, Conn.

TAIC DLC-A is a triallyl isocyanurate, silicon-dioxide blend co-agent for peroxide vulcanization, comprising about 72 % wt TAIC, commercially available from NATROCHEM, INC.

N550 BLACK is a N550 semi-reinforcing carbon black commercially available notably from MAKROChem.

ARMEEN 18D is distilled octadecylamine commercially available from Akzo Nobel.

Torlon^{®} AI-10 is a powdered aromatic polyamideimide commercially available from Solvay Specialty Polymers USA, LLC.

Torlon^{®} 4000TF is a neat resin aromatic polyamide-imide (PAI) fine powder designed for compounding with other polymers and specialty additives, commercially available from Solvay Specialty Polymers USA, LLC.

### Adhesion to Silicone

### Comparative Example 1A

A commercial Tecnoflon^{®} grade P X647, compounded as in Table 1, was placed into an ASTM slab mold over a silicone compound. For an half of the slab wax paper was placed so as to keep the silicone and FKM compound joining together in the remaining uncovered part. Then, we closed the mold and added a 25 lb weight on top of the mold to close it. The system was pressed cured for 30 minutes at 177 deg C.

**Table 1**

| **Polymer compound** | **phr** |
|---|---|
| TECNOFLON^{®} PX647 | 100 |
| VAROX^{®} DBPH-50 | 1.25 |
| TAIC-DLC-A | 3.6 |
| N550 BLACK | 14 |
| ARMEEN 18D | 0.5 |

### Example 1

A commercial Tecnoflon^{®} grade P X647 was blended in open mill with 6 phr of commercial Torlon^{®} AI-10 obtaining the Polymer A. Polymer A was compounded in open mill according to the recipe in Table 2. The material was then molded with silicone as described in Comparative Ex 1.

**Table 2**

| **Polymer compound** | **phr** |
|---|---|
| Polymer A | 100 |
| VAROX DBPH-50 | 1.25 |
| TAIC-DLC-A | 3.6 |
| N550 BLACK | 14 |
| ARMEEN 18D | 0.5 |

### Example 2

A commercial Tecnoflon^{®} grade P X647 was blended in open mill with 6 phr of commercial Torlon^{®} 4000TF obtaining the Polymer B. Polymer B was compounded in open mill according to the recipe in Table 3. The material was then molded with silicone as described in Comparative Ex 1.

**Table 3**

| **Polymer compound** | **phr** |
|---|---|
| Polymer B | 100 |
| VAROX DBPH-50 | 1.25 |
| TAIC-DLC-A | 3.6 |
| N550 BLACK | 14 |
| ARMEEN 18D | 0.5 |

### Adhesion to Stainless Steel

Adhesion property of Tecnoflon^{®} PX 647, Polymer A and Polymer B against Stainless Steel was measured according to the following molding procedure.

A sand blasted stainless steel plaque was placed in ASTM D429-Method B slab mold with FKM compound. For an half of the slab a wax paper so as to keep the stainless steel and FKM compound joining together in the remaining uncovered part. Then, the assembled mold was closed into a standard compression molding machine. It was cured for 30 minutes at 177 deg C.

**Table 4**

| **FORMULATIONS:** | **Comp Ex1** | **Ex1** | **Ex2** |
|---|---|---|---|
| TECNOFLON^{®} PX647 | 100 | | |
| Polymer A | | 100 | |
| Polymer B | | | 100 |
| VAROX DBPH-50 | 1.25 | 1.25 | 1.25 |
| TAIC-DLC-A | 3.6 | 3.6 | 3.6 |
| N550 BLACK | 14 | 14 | 14 |
| ARMEEN 18D | 0.5 | 0.5 | 0.5 |
| **Rheology properties:** | | | |
| *MDR (6' @ 177°C)* | | | |
| ML, Ib-in | 0.7 | 0.7 | 0.8 |
| MH, Ib-in | 20.4 | 21.8 | 26.0 |
| Ts2, sec | 34 | 38 | 35 |
| T90, sec | 71 | 102 | 84 |
| **Physical properties:** | | | |
| *After press cure: 10' @ 177°C* | | | |
| Hardness Shore A, pts. | 65 | 68 | 71 |
| Tensile Strength, psi | 2842 | 1277 | 2209 |
| Elongation, % | 466 | 305 | 387 |
| Modulus @ 50%, psi | 191 | 221 | 247 |
| Modulus @ 100%, psi | 266 | 281 | 486 |
| Modulus @ 200%, psi | 810 | 628 | 1073 |
| Adhesion to Silicon according the ASTM D1876 180° Peel Test | | | |
| **Adhesion after Heat Resistance, 168 hours @ 200°C:** | | | |
| Average Tensile Strength, psi | 6.8 | 8.3 | 7.9 |
| Median Tensile Strength, psi | 6.9 | 8.3 | 8.0 |

| **Adhesion after Heat Resistance, 168 hours @ 230°C:** | | | |
|---|---|---|---|
| Average Tensile Strength, psi | 4.5 | 7.3 | 6.1 |
| Median Tensile Strength, psi | 4.5 | 7.5 | 5.9 |
| Adhesion to Stainless steel according to ASTM D429 Method B | | | |
| **Initial Adhesion after press cure:** | | | |
| Average Tensile Strength, psi | No adhesion | 1732.7 | 1896.5 |
| Median Tensile Strength, psi | | 1887.8 | 2382.0 |

## Claims

1. A composition [composition (C)] comprising:
- at least one (per)fluoroelastomer [fluoroelastomer (A)];
- at least one cross-linking system; and
- at least one aromatic polyamide-imide polymer [polymer (PAI)], said polymer (PAI) being present in an amount of at least 0.5 phr, and at most 30.0 phr, with respect to the fluoroelastomer (A).

2. The composition (C) of Claim 1, wherein said fluoroelastomer (A) fluoroelastomer (A) comprises recurring units derived from at least one (per)fluorinated monomer, wherein said (per)fluorinated monomer is generally selected from the group consisting of:
- C₂-C₈ fluoro- and/or perfluoroolefins, such as tetrafluoroethylene (TFE), hexafluoropropene (HFP), pentafluoropropylene, and hexafluoroisobutylene;
- C₂-C₈ hydrogenated monofluoroolefins, such as vinyl fluoride;
- 1,2-difluoroethylene, vinylidene fluoride (VDF) and trifluoroethylene (TrFE);
- (per)fluoroalkylethylenes complying with formula CH₂=CH-R_{f0}, in which R_{f0} is a C₁-C₆ (per)fluoroalkyl or a C₁-C₆ (per)fluorooxyalkyl having one or more ether groups ;
- chloro- and/or bromo- and/or iodo-C₂-C₆ fluoroolefins, like chlorotrifluoroethylene (CTFE);
- fluoroalkylvinylethers complying with formula CF₂=CFOR_{f1} in which R_{f1} is a C₁-C₆ fluoro- or perfluoroalkyl, e.g. -CF₃, -C₂F₅, -C₃F₇;
- hydrofluoroalkylvinylethers complying with formula CH₂=CFOR_{f1} in which R_{f1} is a C₁-C₆ fluoro- or perfluoroalkyl, e.g. -CF₃, -C₂F₅, -C₃F₇;
- fluoro-oxyalkylvinylethers complying with formula CF₂=CFOX₀, in which X₀ is a C₁-C₁₂ oxyalkyl, or a C₁-C₁₂ (per)fluorooxyalkyl having one or more ether groups; in particular (per)fluoro-methoxy-vinylethers complying with formula CF₂=CFOCF₂OR_{f2} in which R_{f2} is a C₁-C₆ fluoro- or perfluoroalkyl, e.g. -CF₃,-C₂F₅, -C₃F₇ or a C₁-C₆ (per)fluorooxyalkyl having one or more ether groups, like -C₂F₅-O-CF₃;
- functional fluoro-alkylvinylethers complying with formula CF₂=CFOY₀, in which Yo is a C₁-C₁₂ alkyl or (per)fluoroalkyl, or a C₁-C₁₂ oxyalkyl or a C₁-C₁₂ (per)fluorooxyalkyl, said Y₀ group comprising a carboxylic or sulfonic acid group, in its acid, acid halide or salt form;
- (per)fluorodioxoles, of formula : 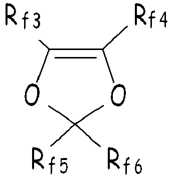
wherein each of R_{f3}, R_{f4}, R_{f5}, R_{f6}, equal to or different from each other, is independently a fluorine atom, a C₁-C₆ fluoro- or per(halo)fluoroalkyl, optionally comprising one or more oxygen atom, e.g. -CF₃, -C₂F₅, -C₃F₇, -OCF₃,-OCF₂CF₂OCF₃.

3. The composition (C) of Claim 1 or 2, wherein said fluoroelastomer (A) is selected among:
(1)VDF-based copolymers, in which VDF is copolymerized with at least one additional comonomer selected from the group consisting of :
(a) C₂-C₈ perfluoroolefins , such as tetrafluoroethylene (TFE), hexafluoropropylene (HFP);
(b) hydrogen-containing C₂-C₈ olefins, such as vinyl fluoride (VF), trifluoroethylene (TrFE), hexafluoroisobutene (HFIB), perfluoroalkyl ethylenes of formula CH₂=CH-R_{f}, wherein R_{f} is a C₁-C₆ perfluoroalkyl group;
(c) C₂-C₈ fluoroolefins comprising at least one of iodine, chlorine and bromine, such as chlorotrifluoroethylene (CTFE);
(d) (per)fluoroalkylvinylethers (PAVE) of formula CF₂ = CFOR_{f}, wherein R_{f} is a C₁-C₆ (per)fluoroalkyl group, preferably CF₃, C₂F₅, C₃F₇;
(e) (per)fluoro-oxy-alkylvinylethers of formula CF₂ = CFOX, wherein X is a C₁-C₁₂ ((per)fluoro)-oxyalkyl comprising catenary oxygen atoms, e.g. the perfluoro-2-propoxypropyl group;
(f) (per)fluorodioxoles having formula : 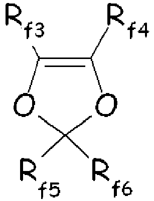 wherein each of R_{f3}, R_{f4}, R_{f5}, R_{f6}, equal to or different from each other, is independently selected from the group consisting of fluorine atom and C₁-C₆ (per)fluoroalkyl groups, optionally comprising one or more than one oxygen atom, such as notably -CF₃, -C₂F₅, -C₃F₇, -OCF₃, -OCF₂CF₂OCF₃; preferably, perfluorodioxoles;
(g) (per)fluoro-methoxy-vinylethers (MOVE, hereinafter) having formula:
CF₂=CFOCF₂OR_{f2}
wherein R_{f2} is selected from the group consisting of C₁-C₆ (per)fluoroalkyls; C₅-C₆ cyclic (per)fluoroalkyls; and C₂-C₆ (per)fluorooxyalkyls, comprising at least one catenary oxygen atom; R_{f2} is preferably -CF₂CF₃ (MOVE1); -CF₂CF₂OCF₃ (MOVE2); or -CF₃ (MOVE3);
(h) C₂-C₈ non-fluorinated olefins (Ol), for example ethylene and propylene; and
(2)TFE-based copolymers, in which TFE is copolymerized with at least one additional comonomer selected from the group consisting of (c), (d), (e), (g), (h) and (i) as above detailed.

4. The composition (C) of anyone of the preceding claims, wherein fluoroelastomer (A) comprises at least one of chlorine, iodine and bromine cure sites (more preferably iodine and/or bromine), in an amount such that the chloride, iodine and bromine content in the fluoroelastomer (A) is of 0.001 to 10% wt, with respect to the total weight of fluoroeastomer (A). Among these, iodine cure sites are those selected for maximizing curing rate, so that fluoroelastomers (A) comprising iodine cure-sites are preferred.

5. The composition (C ) according to anyone of the preceding claims, wherein polymer (PAI) is selected from the group consisting of polymers comprising more than 50% by moles of recurring units comprising at least one aromatic ring, at least one imide group, as such and/or in its amic acid form, and at least one amide group which is not included in the amic acid form of an imide group [recurring units (R_{PAI})], which are selected from the group consisting of units of any of formulae (R_{PAI}-a) and (R_{PAI}-b): 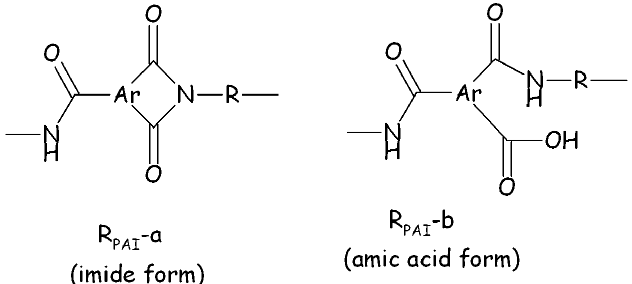 wherein:
- Ar is a trivalent aromatic group; typically Ar is selected from the group consisting of the following structures: 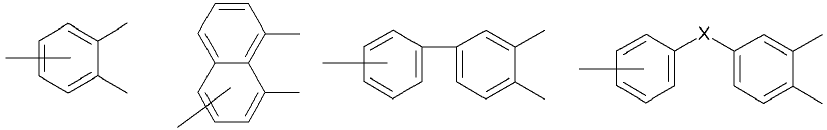 and corresponding optionally substituted structures, with X being -O-, -C(O)-,-CH₂-, -C(CF₃)₂-, -(CF₂)ₙ-, with n being an integer from 1 to 5;
- R is a divalent aromatic group; typically R is selected from the group consisting of the following structures: 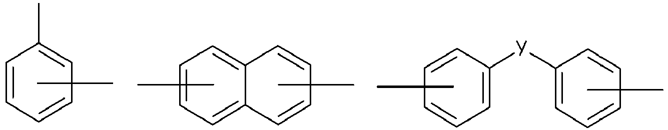 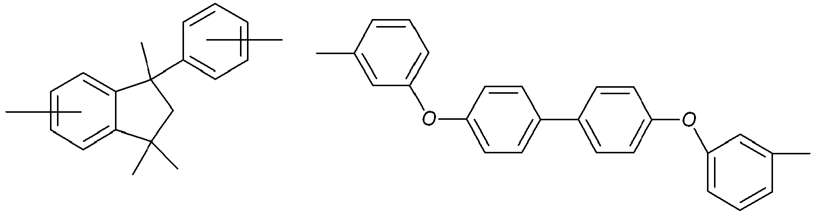 and corresponding optionally substituted structures, with Y being -O-, -S-,-SO₂-, -CH₂-, -C(O)-, -C(CF₃)₂-, -(CF₂)ₙ, n being an integer from 0 to 5.

6. The composition (C) of Claim 5, wherein said recurring units (R_{PAI}7. are selected from recurring units (I), (m) and (n), in their amide-imide (a) or amide-amic acid (b) forms:
(I) 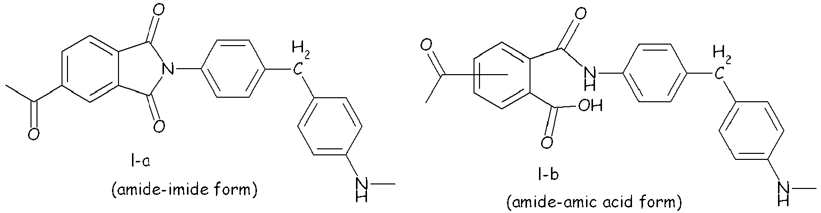 wherein the attachment of the two amide groups to the aromatic ring as shown in (I-b) will be understood to represent the 1,3 and the 1,4 polyamide-amic acid configurations;
(m) 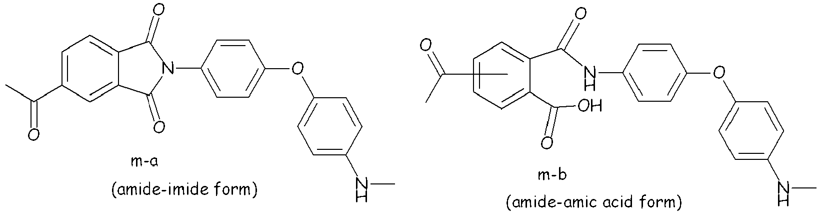 wherein the attachment of the two amide groups to the aromatic ring as shown in (m-b) will be understood to represent the 1,3 and the 1,4 polyamide-amic acid configurations; and
(n) 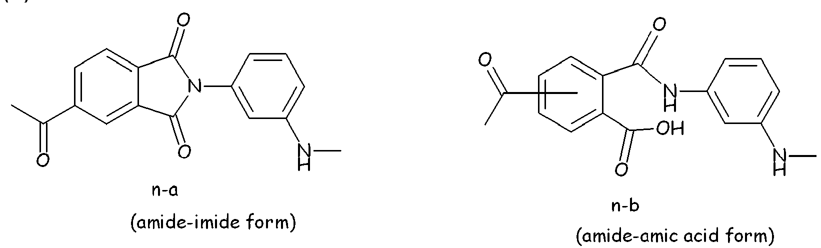 wherein the attachment of the two amide groups to the aromatic ring as shown in (n-b) will be understood to represent the 1,3 and the 1,4 polyamide-amic acid configurations.

7. The composition (C) according to anyone of the preceding claims, which comprises said polymer (PAI) in an amount of at least 1.0 phr, more preferably at least 2.0 phr, and at most 25.0 phr, more preferably at most 18.0 phr, with respect to the fluoroelastomer (A).

8. The composition (C) according to anyone of the preceding claims, said at least one cross-linking system is a peroxide-based cross-linking system comprising at least one organic peroxide [peroxide (O)] and at least one polyunsaturated compound [compound (U)], and wherein said peroxide (O) is preferably selected from the group consisting of:
- di(alkyl/alryl) peroxides, including for instance di-tert-butyl peroxide, 2,5-dimethyl-2,5-bis(tert-butylperoxy)hexane, di(t-butylperoxyisopropyl)benzene, dicumyl peroxide;
- diacyl peroxides, including dibenzoyl peroxide, disuccinic acid peroxide, di(4-methylbenzoyl)peroxide, di(2,4-dichlorobenzoyl)peroxide, dilauroyl peroxide, decanoyl peroxide;
- percarboxylic acids and esters, including di-tert-butyl perbenzoate, t-butylperoxy-2-ethylhexanoate, 1,1,3,3-tetramethylethylbutyl peroxy-2-ethylhexanoate, 2,5-dimethyl-2,5-di(2-ethylhexanoylperoxy)hexane;
- peroxycarbonates including notably di(4-t-butylcyclohexyl)peroxydicarbonate, di(2-phenoxyethyl)peroxydicarbonate, bis[1,3-dimethyl-3-(tert-butylperoxy)butyl] carbonate, t-hexylperoxyisoproprylcarbonate, t-butylperoxyisopropylcarbonate,
- perketals such as 1, 1-bis(tert-butylperoxy)cyclohexane and 2, 2-bis(tertbutylperoxy)butane;
- ketone peroxides such as cyclohexanone peroxide and acetyl acetone peroxide;
- organic hydroperoxides such as cumene hydroperoxide, tert-butyl hydroperoxide, methylethylketone peroxide (otherwise referred to as 2-[(2-hydroperoxybutan-2-yl)peroxy]butane-2-peroxol) and pinane hydroperoxide;
- oil-soluble azo initiators such as 2, 2'-azobis (4-methoxy-2. 4-dimethyl valeronitrile), 2, 2'-azobis (2.4-dimethyl valeronitrile), 2,2'-azobis(isobutyronitrile), 2, 2'-azobis(2-cyano-2-butane), dimethyl-2, 2'-azobisdimethyli sobutyrate, dimethyl-2,2'-azobis(2-methylpropionate), 2,2'-azobis(2-methylbutyronitrile), 1,1'-azobis(cyclohexane-I-carbonitrile), 2, 2'-azobis[N-(2-propenyl)-2-methylpropionamide], 1-[(1 -cyano-1-methyl ethyl)azo]formamide, 2, 2'-azobis(N-cyclohexy1-2-methylpropionamide), 2,2'-azobis(i sobutyronitrile), 2,2'-azobis(2-cyano-2-butane), dimethyl-2,2'-azobisdimethylisobutyrate, 1,1'-azobis(cyclohexanecarbonitrile), 2-(t-butylazo)-2-cyanopropane, 2,2'-azobis[2-methyl-N-(1, 1)-bis(hydroxymethyl)-2-hydroxyethyl]propionamide, 2, 2'-azobis[2-methyl-N-hydroxyethyl]-proprionamide, 2, 2'-azobis(N, N'-dimethyleneisobutyramine), 2, 2'-azobis(2-methyl-N-[1,1-bis(hydroxymethyl)-2-hydroxyethyl] propionamide), 2,2'-azobis(2-methyl-N-[1,1-bis(hydroxymethyl) ethyl] proprionamide), 2, 2'-azobis[2-5 methyl-N-(2-hydroxyethyl) propionamide], 2,2'-azobis(isobutyramide) dihydrate, 2,2'-azobis(2, 2, 4-trimethylpentane), 2, 2'-azobis(2-methylpropane).

9. The composition (C) of Claim 8, wherein the amount of peroxide (O) in the composition (C) is of 0.1 to 15 phr, preferably of 0.2 to 12 phr, more preferably of 1.0 to 7.0 phr, relative to 100 weight parts of fluoroelastomer (A).

10. The composition (C) according to anyone of claims 8 to 9, wherein compound (U) is selected from the group consisting of:
- compounds (U) comprising two carbon-carbon unsaturations, which are preferably selected from the group consisting of bis-olefins [bis-olefins (OF)] having general formula : 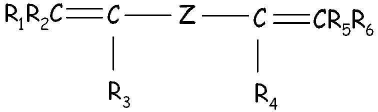 wherein R₁, R₂, R₃, R₄, R₅ and R₆, equal or different from each other, are H or C₁-C₅ alkyl; Z is a linear or branched C₁-C₁₈ (hydro)carbon radical (including alkylene or cycloalkylene radical), optionally containing oxygen atoms, preferably at least partially fluorinated, or a (per)fluoro(poly)oxyalkylene radical comprising one or more catenary ethereal bonds; and
- compounds (U) comprising three carbon-carbon unsaturations, which are preferably selected from the group consisting of :
- tri-substuituted cyanurate compounds of general formula: 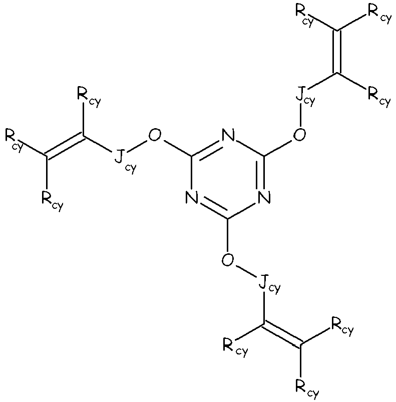 wherein each of R_{cy}, equal to or different from each other and at each occurrence, is independently selected from H or a group -R_{rcy} or -OR_{rcy}, with R_{rcy} being C₁-C₅ alkyl, possibly comprising halogen(s), and each of J_{cy}, equal to or different from each other and at each occurrence, is independently selected from a bond or a divalent hydrocarbon group, optionally comprising heteroatoms;
tri-substuituted cyanurate compounds include notably preferred triallyl cyanurate, trivinyl cyanurate;
- tri-substuituted isocyanurate compounds of general formula: 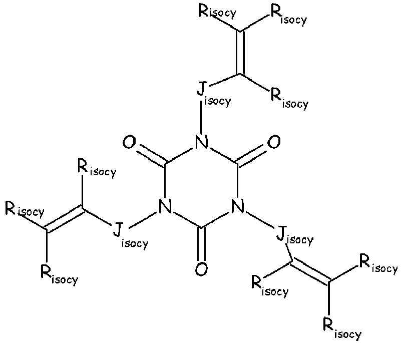 wherein each of R_{isocy}, equal to or different from each other and at each occurrence, is independently selected from H or a group -R_{risocy} or -OR_{risocy}, with R_{risocy} being C₁-C₅ alkyl, possibly comprising halogen(s), and each of J_{isocy}, equal to or different from each other and at each occurrence, is independently selected from a bond or a divalent hydrocarbon group, optionally comprising heteroatoms;
tri-substuituted isocyanurate compounds include notably preferred triallyl isocyanurate (otherwise referred to as "TAIC"), trivinyl isocyanurate, with TAIC being the most preferred;
- tri-substituted triazine compounds of general formula: 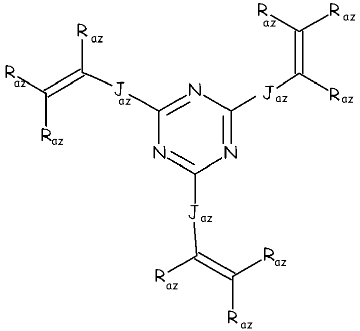 wherein each of R_{az}, equal to or different from each other and at each occurrence, is independently selected from H or a group -R_{raz} or-ORraz, with R_{raz} being C₁-C₅ alkyl, possibly comprising halogen(s), and each of J_{az}, equal to or different from each other and at each occurrence, is independently selected from a bond or a divalent hydrocarbon group, optionally comprising heteroatoms;
- tri-substituted phosphite compounds of general formula: 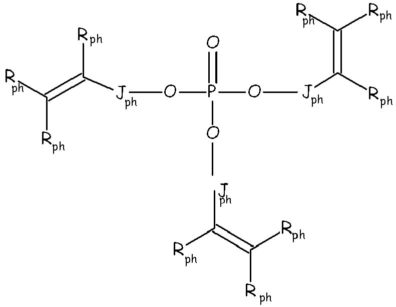 wherein each of Rₚₕ, equal to or different from each other and at each occurrence, is independently selected from H or a group -Rᵣₚₕ or -ORᵣₚₕ, with Rᵣₚₕ being C₁-C₅ alkyl, possibly comprising halogen(s), and each of Jₚₕ, equal to or different from each other and at each occurrence, is independently selected from a bond or a divalent hydrocarbon group, optionally comprising heteroatoms; tri-substituted phosphite compounds include notably preferred tri-allyl phosphite;
- tri-substituted alkyltrisiloxanes of general formula: 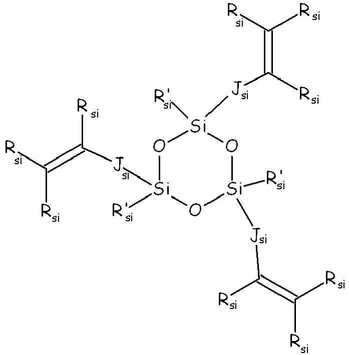 wherein each of Rₛᵢ, equal to or different from each other and at each occurrence, is independently selected from H or a group -Rᵣₛᵢ or -ORᵣₛᵢ, with Rᵣₛᵢ being C₁-C₅ alkyl, possibly comprising halogen(s), each of R'ₛᵢ, equal to or different from each other and at each occurrence, is independently selected from C₁-C₅ alkyl groups, possibly comprising halogen(s), and each of Jₛᵢ, equal to or different from each other and at each occurrence, is independently selected from a bond or a divalent hydrocarbon group, optionally comprising heteroatoms; tri-substituted alkyltrisiloxanes compounds include notably preferred 2,4,6-trivinyl methyltrisiloxane and 2,4,6-trivinyl ethyltrisiloxane;
- N,N-disubstituted acrylamide compounds of general formula: 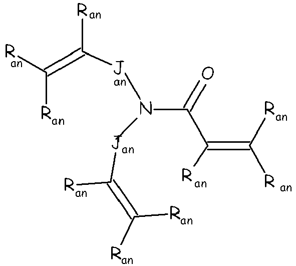 wherein each of Rₐₙ, equal to or different from each other and at each occurrence, is independently selected from H or a group -Rran or-ORran, with Rran being C₁-C₅ alkyl, possibly comprising halogen(s), and each of Jₐₙ, equal to or different from each other and at each occurrence, is independently selected from a bond or a divalent hydrocarbon group, optionally comprising heteroatoms; N,N-disubstituted acrylamide compounds include notably preferred N,N-diallylacrylamide; and
- compounds (U) comprising four or more carbon-carbon unsaturations, which are preferably selected from tris(diallylamine)-s-triazine of formula 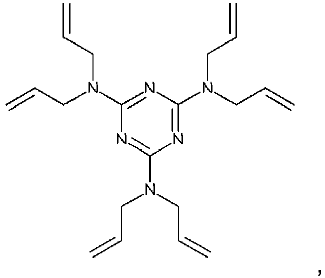 hexa-allylphosphoramide, N,N,N',N'-tetra-allyl terephthalamide, N,N,N',N'-tetra-allyl malonamide.

11. The composition according to anyone of the preceding claims, wherein the amount of the compound (U) ranges from 0.1 to 20 weight parts per 100 parts by weight (phr) of fluoroelastomer (A), preferably from 1 to 15 weight parts per 100 parts by weight of fluoroelastomer (A), more preferably from 1 to 10 weight parts per 100 parts by weight of fluoroelastomer (A).A method for fabricating shaped articles comprising curing the composition (C), according to anyone of claims 1 to 13.

12. The composition (C) according to anyone of Claims 1 to 7, wherein the said at least one cross-linking system is a ionic-based cross-linking system comprising at least one polyhydroxylated compound, at least one accelerant, and at least one basic metal oxide preferably selected from the group consisting of ZnO, MgO, PbO, and their mixtures.

13. A process for the manufacture of composition (C), according to anyone of Claims 1 to 12, said method comprising mixing:
- the fluoroelastomer (A);
- the cross-linking system; and
- the polymer (PAI).

14. A method for fabricating shaped articles comprising curing the composition (C), according to anyone of claims 1 to 12.

15. A cured article obtained from the composition (C), according to anyone of Claims 1 to 12, said cured article being selected from the group consisting of sealing articles, including O(square)-rings, packings, gaskets, diaphragms, shaft seals, valve stem seals, piston rings, crankshaft seals, cam shaft seals, and oil seals or maybe piping and tubings, in particular flexible hoses or other items, including conduits for delivery of hydrocarbon fluids and fuels.

16. An assembly including a substrate and at least one cured article, according to Claim 15.

## Patentansprüche

1. Zusammensetzung [Zusammensetzung (C)], umfassend:
- mindestens ein (Per)fluorelastomer [Fluorelastomer (A)];
- mindestens ein Vernetzungssystem und
- mindestens ein aromatisches Polyamidimidpolymer [Polymer (PAI)], wobei das Polymer (PAI) in einer Menge von mindestens 0,5 phr und höchstens 30,0 phr, bezogen auf das Fluorelastomer (A), vorliegt.

2. Zusammensetzung (C) nach Anspruch 1, wobei das Fluorelastomer (A) Fluorelastomer (A) Wiederholungseinheiten, die sich von mindestens einem (per)fluorierten Monomer ableiten, umfasst, wobei das (per)fluorierte Monomer allgemein aus der Gruppe bestehend aus
- C₂-C₈-Fluor- und/oder -Perfluorolefinen, wie Tetrafluorethylen (TFE), Hexafluorpropen (HFP), Pentafluorpropylen und Hexafluorisobutylen;
- hydrierten C₂-C₈-Monofluorolefinen, wie Vinylfluorid;
- 1,2-Difluorethylen, Vinylidenfluorid (VDF) und Trifluorethylen (TrFE);
- (Per)fluoralkylethylenen der Formel CH₂=CH-R_{f0}, worin R_{f0} für ein C₁-C₆- (Per) fluoralkyl oder ein C₁-C₆-(Per)fluoroxyalkyl mit einer oder mehreren Ethergruppen steht;
- Chlor- und/oder Brom- und/oder Iod-C₂-C₆-fluor-olefinen, wie Chlortrifluorethylen (CTFE);
- Fluoralkylvinylethern der Formel CF₂=CFOR_{f1}, worin R_{f1} für ein C₁-C₆-Fluor- oder -Perfluoralkyl, z.B.-CF₃, -C₂F₅, -C₃F₇, steht;
- Hydrofluoralkylvinylethern der Formel CH₂=CFOR_{f1}, worin R_{f1} für ein C₁-C₆-Fluor- oder -Perfluoralkyl, z. B. -CF₃, -C₂F₅, -C₃F₇, steht;
- Fluoroxyalkylvinylethern der Formel CF₂=CFOX₀, worin X₀ für ein C₁-C₁₂-Oxyalkyl oder ein C₁-C₁₂-(Per)fluoroxyalkyl mit einer oder mehreren Ethergruppen steht, insbesondere (Per)fluormethoxy-vinylethern der Formel CF₂=CFOCF₂OR_{f2}, worin R_{f2} für ein C₁-C₆-Fluor- oder -Perfluoralkyl, z. B. -CF₃,-C₂F₅, -C₃F₇ oder ein C₁-C₆- (Per) fluoroxyalkyl mit einer oder mehreren Ethergruppen, wie -C₂F₅-O-CF₃, steht;
- funktionellen Fluoralkylvinylethern der Formel CF₂=CFOY₀, worin Y₀ für ein C₁-C₁₂-Alkyl oder -(Per)fluoralkyl oder ein C₁-C₁₂-Oxyalkyl oder ein C₁-C₁₂- (Per) fluoroxyalkyl steht, wobei die Gruppe Y₀ eine Carbon- oder Sulfonsäuregruppe in ihrer Säure-, Säurehalogenid- oder Salzform umfasst;
- (Per)fluordioxolen der Formel: 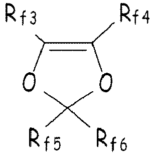 worin R_{f3}, R_{f4}, R_{f5} und R_{f6}, die gleich oder voneinander verschieden sind, jeweils unabhängig voneinander für ein Fluoratom, ein C₁-C₆-Fluor- oder
- Per(halogen)fluoralkyl, das gegebenenfalls ein oder mehrere Sauerstoffatome enthält, z. B. -CF₃,-C₂F₅, -C₃F₇, -OCF₃, -OCF₂CF₂OCF₃, stehen;
ausgewählt ist.

3. Zusammensetzung (C) nach Anspruch 1 oder 2, wobei das Fluorelastomer (A) aus
(1) auf VDF basierenden Copolymeren, in denen VDF mit mindestens einem zusätzlichen Comonomer aus der Gruppe bestehend aus
(a) C₂-C₈-Perfluorolefinen, wie Tetrafluorethylen (TFE), Hexafluorpropylen (HFP);
(b) wasserstoffhaltigen C₂-C₈-Olefinen, wie Vinyl-fluorid (VF), Trifluorethylen (TrFE), Hexafluoriso-buten (HFIB), Perfluoralkylethylenen der Formel CH₂=CH-R_{f}, worin R_{f} für eine C₁-C₆-Perfluoralkyl-gruppe steht;
(c) C₂-C₈-Fluorolefinen mit mindestens einem von Iod, Chlor und Brom, wie Chlortrifluorethylen (CTFE);
(d) (Per)fluoralkylvinylethern (PAVE) der Formel CF₂=CFOR_{f}, worin R_{f} für eine C₁-C₆-(Per) fluoralkyl-gruppe, vorzugsweise -CF₃, -C₂F₅, -C₃F₇, steht;
(e) (Per)fluoroxyalkylvinylethern der Formel CF₂=CFOX, worin X für ein C₁-C₁₂- ( (Per) fluor) oxyalkyl mit kettenständigen Sauerstoffatomen, z. B. die Perfluor-2-propoxypropylgruppe, steht;
(f) (Per)fluordioxolen der Formel: 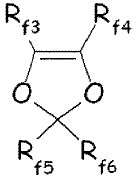 worin R_{f3}, R_{f4}, R_{f5} und R_{f6}, die gleich oder voneinander verschieden sind, jeweils unabhängig voneinander aus der Gruppe bestehend aus einem Fluoratom und C₁-C₆-(Per) fluoralkylgruppen, die gegebenenfalls ein oder mehr als ein Sauerstoffatom enthalten, wie insbesondere -CF₃, -C₂F₅, -C₃F₇,-OCF₃, -OCF₂CF₂OCF₃, ausgewählt sind; vorzugsweise Perfluordioxolen;
(g) (Per)fluormethoxyvinylethern (im Folgenden MOVE) der Formel:
CF₂=CFOCF₂OR_{f2},
worin R_{f2} aus der Gruppe bestehend aus C₁-C₆-(Per)fluoralkylgruppen, cyclischen C₅-C₆- (Per)-fluoralkylgruppen und C₂-C₆-(Per)fluoroxyalkyl-gruppen mit mindestens einem kettenständigen Sauerstoffatom ausgewählt ist; R_{f2} vorzugsweise für -CF₂CF₃ (MOVE1); -CF₂CF₂OCF₃ (MOVE2) oder -CF₃ (MOVE3) steht;
(h) nichtfluorierten C₂-C₈-Olefinen (OI), beispielsweise Ethylen und Propylen;
copolymerisiert ist; und
(2) auf TFE basierenden Copolymeren, in denen TFE mit mindestens einem zusätzlichen Comonomer aus der Gruppe bestehend aus (c), (d), (e), (g), (h) und (i) gemäß obigen Angaben copolymerisiert ist; ausgewählt ist.

4. Zusammensetzung (C) nach einem der vorhergehenden Ansprüche, wobei Fluorelastomer (A) Chlor-, Iod- und/oder Brom-Härtungsstellen (weiter bevorzugt Iod und/oder Brom) in einer solchen Menge umfasst, dass der Chlor-, Iod- und/oder Bromgehalt in dem Fluorelastomer (A) 0,001 bis 10 Gew.-%, bezogen auf das Gesamtgewicht von Fluorelastomer (A), beträgt. Hierunter sind Iod-Härtungsstellen diejenigen, die zur Maximierung der Härtungsrate ausgewählt werden, so dass Fluorelastomere (A) mit Iod-Härtungsstellen bevorzugt sind.

5. Zusammensetzung (C) nach einem der vorhergehenden Ansprüche, wobei Polymer (PAI) ausgewählt ist aus der Gruppe bestehend aus Polymeren, die mehr als 50 Mol-% Wiederholungseinheiten mit mindestens einem aromatischen Ring, mindestens einer Imidgruppe als solcher und/oder in ihrer Amidsäure-Form und mindestens einer Amidgruppe, die nicht in der Amidsäure-Form einer Imidgruppe enthalten ist, [Wiederholungseinheiten (R_{PAI})] umfassen, die ausgewählt sind aus der Gruppe bestehend aus Einheiten einer der Formeln (R_{PAI}-a) und (R_{PAI}-b): 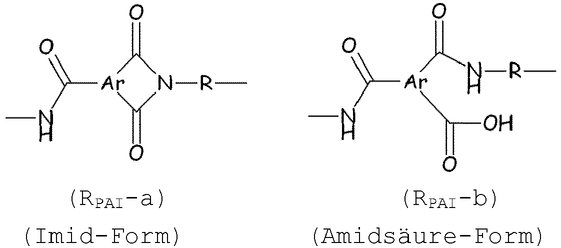 wobei:
- Ar für eine dreiwertige aromatische Gruppe steht; Ar typischerweise aus der Gruppe bestehend aus den folgenden Strukturen: 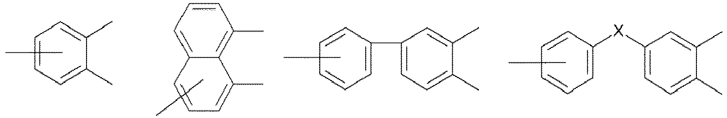 und entsprechenden gegebenenfalls substituierten Strukturen ausgewählt ist, wobei X für -O-, -C(O)-, -CH₂-, -C(CF₃)₂-, -(CF₂)ₙ- steht, wobei n für eine ganze Zahl von 1 bis 5 steht;
- R für eine zweiwertige aromatische Gruppe steht; R typischerweise aus der Gruppe bestehend aus den folgenden Strukturen: 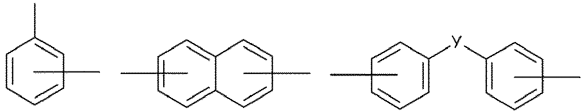 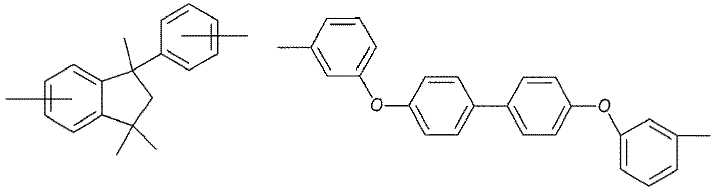 und entsprechenden gegebenenfalls substituierten Strukturen ausgewählt ist, wobei Y für -O-, -S-, -SO₂-, -CH₂-, -C(O)-, -C(CF₃)₂-, -(CF₂)ₙ- steht, wobei n für eine ganze Zahl von 0 bis 5 steht.

6. Zusammensetzung (C) nach Anspruch 5, wobei die Wiederholungseinheiten (R_{PAI}) aus Wiederholungseinheiten (1), (m) und (n) in ihren Amid-Imid-Formen (a) oder Amid-Amidsäure-Formen (B) ausgewählt sind:
(1) 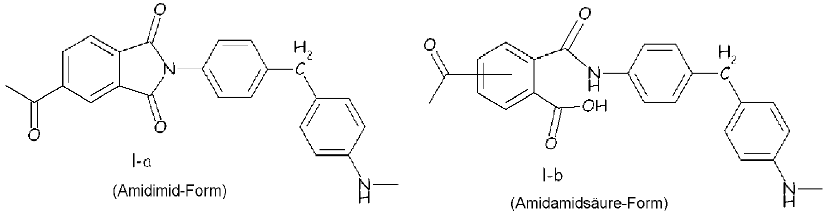 wobei es sich versteht, dass die Anbindung der beiden Amidgruppen an den aromatischen Ring, wie in (1-b) gezeigt, die 1,3- und die 1,4-Polyamidamidsäure-Konfigurationen repräsentiert;
(m) 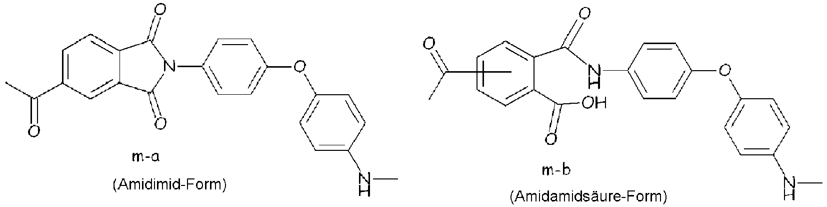 wobei es sich versteht, dass die Anbindung der beiden Amidgruppen an den aromatischen Ring, wie in (m-b) gezeigt, die 1,3- und die 1,4-Polyamidamidsäure-Konfigurationen repräsentiert; und
(n) 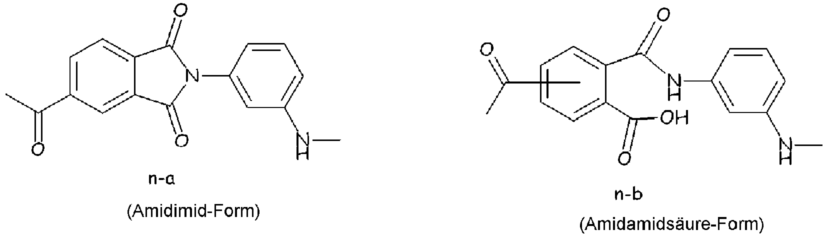
wobei es sich versteht, dass die Anbindung der beiden Amidgruppen an den aromatischen Ring, wie in (n-b) gezeigt, die 1-3- und die 1,4-Polyamidamidsäure-Konfigurationen repräsentiert.

7. Zusammensetzung (C) nach einem der vorhergehenden Ansprüche, die das Polymer (PAI) in einer Menge von mindestens 1,0 phr, weiter bevorzugt mindestens 2,0 phr, und höchstens 25,0 phr, weiter bevorzugt höchstens 18,0 phr, bezogen auf das Fluorelastomer (A), umfasst.

8. Zusammensetzung (C) nach einem der vorhergehenden Ansprüche, wobei es sich bei dem mindestens einen Vernetzungssystem um ein auf Peroxid basierendes Vernetzungssystem handelt, das mindestens ein organisches Peroxid [Peroxid (O)] und mindestens eine mehrfach ungesättigte Verbindung [Verbindung (U)] umfasst, und wobei das Peroxid (O) vorzugsweise aus der Gruppe bestehend aus
- Di(alkyl/aryl)peroxiden einschließlich beispielsweise Di-tert-butylperoxid, 2,5-Dimethyl-2,5-bis(tert-butylperoxy)hexan, Di(t-butylperoxyisopropyl)benzol, Dicumylperoxid;
- Diacylperoxiden einschließlich Dibenzoylperoxid, Dibernsteinsäureperoxid, Di(4-methylbenzoyl)-peroxid, Di(2,4-dichlorbenzoyl)peroxid, Dilauroylperoxid, Decanoylperoxid;
- Percarbonsäuren und Percarbonsäureestern einschließlich Di-tert-butylperbenzoat, t-Butylperoxy-2-ethylhexanoat, 1,1,3,3-Tetramethylethylbutylperoxy-2-ethylhexanoat, 2,5-Dimethyl-2,5-di(2-ethylhexanoylperoxy)hexan;
- Peroxycarbonaten einschließlich insbesondere Di(4-t-butylcyclohexyl)peroxydicarbonat, Di(2-phenoxyethyl)peroxydicarbonat, Bis[1,3-dimethyl-3-(tert-butylperoxy)butyl]carbonat, t-Hexylperoxyisopropylcarbonat, t-Butylperoxyisopropylcarbonat;
- Perketalen wie 1,1-Bis(tert-butylperoxy)cyclohexan und 2,2-Bis(tert-butylperoxy)butan;
- Ketonenperoxiden wie Cyclohexanonperoxid und Acetylacetonperoxid;
- organischen Hydroperoxiden wie Cumolhydroperoxid, tert-Butylhydroperoxid, Methylethylketonperoxid (ansonsten als 2-[(2-Hydroperoxybutan-2-yl)peroxy]butan-2-peroxol bezeichnet) und Pinanhydroperoxid;
- öllöslichen Azoinitiatoren wie 2,2'-Azobis(4-methoxy-2,4-dimethylvaleronitril), 2,2'-Azobis-(2,4-dimethylvaleronitril), 2,2'-Azobis(isobutyro-nitril), 2,2'-Azobis(2-cyano-2-butan), Dimethyl-2,2'-azobisdimethylisobutyrat, Dimethyl-2,2'-azobis(2-methylpropionat), 2,2'-Azobis(2-methyl-butyronitril), 1,1'-Azobis(cyclohexan-1-carbo-nitril), 2,2'-Azobis[N-(2-propenyl)-2-methyl-propionamid], 1-[(1-Cyano-1-methylethyl)azo]-formamid, 2,2'-Azobis(N-cyclohexyl-2-methyl-propionamid), 2,2'-Azobis(isobutyronitril), 2,2'-Azobis(2-cyano-2-butan), Dimethyl-2,2'-azobis-dimethylisobutyrat, 1,1'-Azobis(cyclohexancarbo-nitril), 2-(t-Butylazo)-2-cyanopropan, 2,2'-Azobis[2-methyl-N-(1,1)-bis(hydroxymethyl)-2-hydroxyethyl]propionamid, 2,2'-Azobis[2-methyl-N-hydroxyethyl]proprionamid, 2,2'-Azobis(N,N'-dimethylenisobutyramin), 2,2'-Azobis(2-methyl-N-[1,1-bis(hydroxymethyl)-2-hydroxyethyl]propion-amid), 2,2'-Azobis(2-methyl-N-[1,1-bis(hydroxymethyl)ethyl]propionamid), 2,2'-Azobis[2-5-methyl-N-(2-hydroxyethyl)propionamid], 2,2'-Azobis-(isobutyramid)dihydrat, 2,2'-Azobis(2,2,4-Trimethylpentan), 2,2'-Azobis(2-methylpropan) ausgewählt ist.

9. Zusammensetzung (C) nach Anspruch 8, wobei die Menge von Peroxid (O) in der Zusammensetzung (C) 0,1 bis 15 phr, vorzugsweise 0,2 bis 12 phr, weiter bevorzugt 1,0 bis 7,0 phr, bezogen auf 100 Gewichtsteile Fluorelastomer (A), beträgt.

10. Zusammensetzung (C) nach einem der Ansprüche 8 bis 9, wobei Verbindung (U) aus der Gruppe bestehend aus
- Verbindungen (U) mit zwei Kohlenstoff-Kohlenstoff-Ungesättigtheiten, die vorzugsweise aus der Gruppe bestehend aus Bisolefinen [Bisolefinen (OF)] mit der allgemeinen Formel: 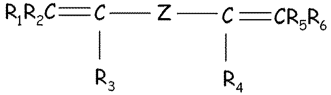 ausgewählt sind, wobei R₁, R₂, R₃, R₄, R₅ und R₆ gleich oder voneinander verschieden für H oder C₁-C₅-Alkyl stehen, Z für einen linearen oder verzweigten C₁-C₁₈-Kohlen(wasser)stoffrest (einschließlich Alkylen-oder Cycloalkylenrest), der gegebenenfalls Sauerstoffatome enthält und vorzugsweise mindestens teilweise fluoriert ist, oder einen (Per)fluor(poly)oxyalkylenrest mit einer oder mehreren kettenständigen Etherbindungen stehen; und
- Verbindungen (U) mit drei Kohlenstoff-Kohlenstoff-Ungesättigtheiten, die vorzugsweise aus der Gruppe bestehend aus
- trisubstituierten Cyanuratverbindungen der allgemeinen Formel: 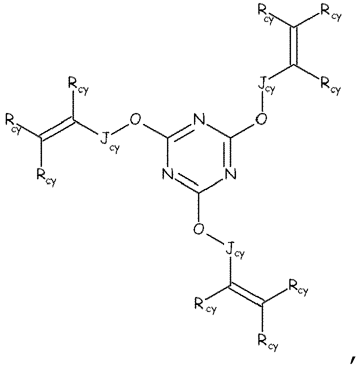 wobei R_{cy} gleich oder voneinander verschieden und bei jedem Vorkommen jeweils unabhängig aus H oder einer Gruppe -R_{rcy} oder
- OR_{rcy} ausgewählt ist, wobei R_{rcy} für C₁-C₅-Alkyl, das gegebenenfalls ein oder mehrere Halogene umfasst, steht, und J_{cy} gleich oder voneinander verschieden und bei jedem Vorkommen jeweils unabhängig aus einer Bindung oder einer zweiwertigen Kohlenwasserstoffgruppe, die gegebenenfalls Heteroatome umfasst, ausgewählt ist; trisubstituierte Cyanuratverbindungen besonders bevorzugt Triallylcyanurat, Trivinylcyanurat umfassen;
- trisubstituierten Isocyanuratverbindungen der allgemeinen Formel: 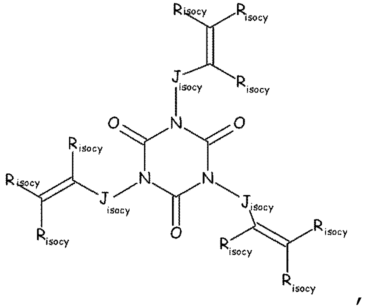 wobei R_{isocy} gleich oder voneinander verschieden und bei jedem Vorkommen jeweils unabhängig aus H oder einer Gruppe -R_{risocy} oder -OR_{risocy} ausgewählt ist, wobei R_{risocy} für C₁-C₅-Alkyl, das gegebenenfalls ein oder mehrere Halogene umfasst, steht, und J_{isocy} gleich oder voneinander verschieden und bei jedem Vorkommen jeweils unabhängig aus einer Bindung oder einer zweiwertigen Kohlenwasserstoffgruppe, die gegebenenfalls Heteroatome umfasst, ausgewählt ist; trisubstituierte Isocyanuratverbindungen besonders bevorzugt Triallylisocyanurat (ansonsten als "TAIC" bezeichnet), Trivinylisocyanurat umfassen, wobei TAIC ganz besonders bevorzugt ist;
- trisubstituierten Triazinverbindungen der allgemeinen Formel: 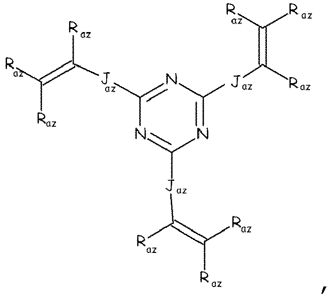 wobei R_{az} gleich oder voneinander verschieden und bei jedem Vorkommen jeweils unabhängig aus H oder einer Gruppe -R_{raz} oder
- OR_{raz} ausgewählt ist, wobei R_{raz} für C₁-C₅-Alkyl, das gegebenenfalls ein oder mehrere Halogene umfasst, steht, und J_{az} gleich oder voneinander verschieden und bei jedem Vorkommen jeweils unabhängig aus einer Bindung oder einer zweiwertigen Kohlenwasserstoffgruppe, die gegebenenfalls Heteroatome umfasst, ausgewählt ist;
- trisubstituierten Phosphitverbindungen der allgemeinen Formel: 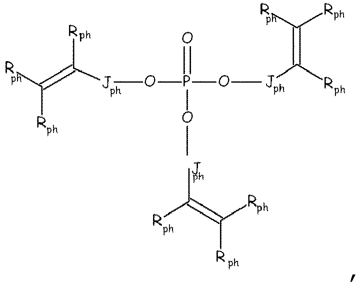 wobei Rₚₕ gleich oder voneinander verschieden und bei jedem Vorkommen jeweils unabhängig aus H oder einer Gruppe -Rᵣₚₕ oder
- ORᵣₚₕ ausgewählt ist, wobei Rᵣₚₕ für C₁-C₅-Alkyl, das gegebenenfalls ein oder mehrere Halogene umfasst, steht, und Jₚₕ gleich oder voneinander verschieden und bei jedem Vorkommen jeweils unabhängig aus einer Bindung oder einer zweiwertigen Kohlenwasserstoffgruppe, die gegebenenfalls Heteroatome umfasst, ausgewählt ist; trisubstituierte Phosphitverbindungen besonders bevorzugt Triallylphosphit umfassen;
- trisubstituierten Alkyltrisiloxanen der allgemeinen Formel: 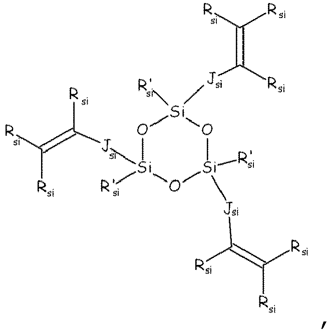 wobei Rₛᵢ gleich oder voneinander verschieden und bei jedem Vorkommen jeweils unabhängig aus H oder einer Gruppe -Rᵣₛᵢ oder
- ORᵣₛᵢ ausgewählt ist, wobei Rᵣₛᵢ für C₁-C₅-Alkyl, das gegebenenfalls ein oder mehrere Halogene umfasst, steht, R'ₛᵢ gleich oder voneinander verschieden und bei jedem Vorkommen jeweils unabhängig aus C₁-C₅-Alkylgruppen, die gegebenenfalls ein oder mehrere Halogene umfassen, steht, und Jₛᵢ gleich oder voneinander verschieden und bei jedem Vorkommen jeweils unabhängig aus einer Bindung oder einer zweiwertigen Kohlenwasserstoffgruppe, die gegebenenfalls Heteroatome umfasst, ausgewählt ist; trisubstituierte Alkyltrisiloxanverbindungen besonders bevorzugt 2,4,6-Trivinylmethyltrisiloxan und 2,4,6-Trivinylethyltrisiloxan umfassen;
- N,N-disubstituierten Acrylamidverbindungen der allgemeinen Formel: 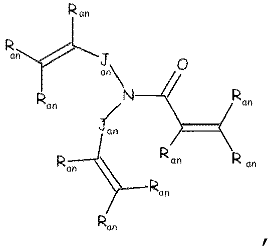 wobei Rₐₙ gleich oder voneinander verschieden und bei jedem Vorkommen jeweils unabhängig aus H oder einer Gruppe -Rᵣₐₙ oder -ORᵣₐₙ ausgewählt ist, wobei Rᵣₐₙ für C₁-C₅-Alkyl, das gegebenenfalls ein oder mehrere Halogene umfasst, steht, und Jₐₙ gleich oder voneinander verschieden und bei jedem Vorkommen jeweils unabhängig aus einer Bindung oder einer zweiwertigen Kohlenwasserstoffgruppe, die gegebenenfalls Heteroatome umfasst, ausgewählt ist; N,N-disubstituierte Acrylamidverbindungen besonders bevorzugt N,N-Diallylacrylamid umfassen; ausgewählt sind; und
- Verbindungen (U) mit vier oder mehr Kohlenstoff-Kohlenstoff-Ungesättigtheiten, die vorzugsweise aus Tris(diallylamin)-s-triazin der Formel 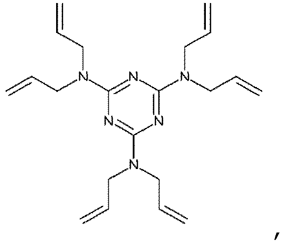 Hexaallylphosphoramid, N,N,N',N'-Tetraallylterephthalamid, N,N,N',N'-Tetraallylmalonamid ausgewählt sind;
ausgewählt ist.

11. Zusammensetzung nach einem der vorhergehenden Ansprüche, wobei die Menge der Verbindung (U) im Bereich von 0,1 bis 20 Gewichtsteilen pro 100 Gewichtsteile (phr) Fluorelastomer (A), vorzugsweise von 1 bis 15 Gewichtsteilen pro 100 Gewichtsteile Fluorelastomer (A), weiter bevorzugt von 1 bis 10 Gewichtsteilen pro 100 Gewichtsteile Fluorelastomer (A), liegt. Verfahren zur Herstellung von Formkörpern, bei dem man die Zusammensetzung (C) nach einem der Ansprüche 1 bis 13 härtet.

12. Zusammensetzung (C) nach einem der Ansprüche 1 bis 7, wobei es sich bei dem mindestens einen Vernetzungssystem um ein ionenbasiertes Vernetzungssystem handelt, das mindestens eine polyhydroxylierte Verbindung, mindestens einen Beschleuniger und mindestens ein basisches Metalloxid, das vorzugsweise aus der Gruppe bestehend aus ZnO, MgO, PbO und Mischungen davon ausgewählt ist, umfasst.

13. Verfahren zur Herstellung von Zusammensetzung (C) nach einem der Ansprüche 1 bis 12, wobei das Verfahren das Mischen
- des Fluorelastomers (A),
- des Vernetzungssystems und
- des Polymers (PAI)
umfasst.

14. Verfahren zur Herstellung von Formkörpern, bei dem man die Zusammensetzung (C) nach einem der Ansprüche 1 bis 12 härtet.

15. Gehärteter Artikel, erhalten aus der Zusammensetzung (C) nach einem der Ansprüche 1 bis 12, wobei der gehärtete Artikel aus der Gruppe bestehend aus Dichtungsartikeln einschließlich O(Quadrat)-Ringen, Packungen, Dichtungen, Diaphragmen, Wellendichtungen, Ventilschaftdichtungen, Kolbenringen, Kurbelwellendichtungen, Nockenwellendichtungen und Öldichtungen oder vielleicht Rohren und Schläuchen, insbesondere flexiblen Schläuchen, oder anderen Gegenständen einschließlich Leitungen zur Beförderung von Kohlenwasserstofffluiden und Kraftstoffen ausgewählt ist.

16. Anordnung mit mindestens einem Substrat und mindestens einem gehärteten Artikel nach Anspruch 15.

## Revendications

1. Composition [composition (C)] comprenant :
- au moins un (per)fluoroélastomère [fluoroélastomère (A)] ;
- au moins un système de réticulation ; et
- au moins un polymère de type polyamide aromatique-imide [polymère (PAI)], ledit polymère (PAI) étant présent en une quantité d'au moins 0,5 phr, et d'au plus 30,0 phr, par rapport au fluoroélastomère (A).

2. Composition (C) selon la revendication 1, ledit fluoroélastomère (A) fluoroélastomère (A) comprenant des motifs répétitifs issus d'au moins un monomère (per)fluoré, ledit monomère (per)fluoré étant généralement choisi dans le groupe constitué par :
- des fluorooléfines et/ou perfluorooléfines en C₂-C₈, telles que le tétrafluoroéthylène (TFE), l'hexafluoropropène (HFP), le pentafluoropropylène, et l'hexafluoroisobutylène ;
- des monofluorooléfines hydrogénées en C₂-C₈, telles que le fluorure de vinyle ;
- le 1,2-difluoroéthylène, le fluorure de vinylidène (VDF) et le trifluoroéthylène (TrFE) ;
- des (per)fluoroalkyléthylènes répondant à la formule CH₂=CH-R_{f0}, dans laquelle R_{f0} est un C₁-C₆ (per)fluoroalkyle ou un C₁-C₆ (per)fluorooxyalkyle possédant un ou plusieurs groupes éther ;
- des chloro-C₂-C₆ fluorooléfines et/ou bromo-C₂-C₆ fluorooléfines et/ou iodo-C₂-C₆ fluorooléfines, comme le chlorotrifluoroéthylène (CTFE) ;
- des fluoroalkylvinyléthers répondant à la formule CF₂=CFOR_{f1}, dans laquelle R_{f1} est un fluoroalkyle ou perfluoroalkyle en C₁-C₆, par ex. -CF₃, -C₂F₅, -C₃F₇ ;
- des hydrofluoroalkylvinyléthers répondant à la formule CH₂=CFOR_{f1}, dans laquelle R_{f1} est un fluoroalkyle ou perfluoroalkyle en C₁-C₆, par ex. - CF₃, -C₂F₅, -C₃F₇ ;
- des fluoro-oxyalkylvinyléthers répondant à la formule CF₂=CFOX₀, dans laquelle X₀ est un C₁-C₁₂ oxyalkyle, ou un C₁-C₁₂ (per)fluorooxyalkyle possédant un ou plusieurs groupes éther ; en particulier des (per)fluoro-méthoxy-vinyléthers répondant à la formule CF₂=CFOCF₂OR_{f2}, dans laquelle R_{f2} est un fluoroalkyle ou perfluoroalkyle en C₁-C₆, par ex. -CF₃, -C₂F₅, -C₃F₇ ou un C₁-C₆ (per)fluorooxyalkyle possédant un ou plusieurs groupes éther, comme -C₂F₅-O-CF₃ ;
- des fluoro-alkylvinyléthers fonctionnalisés répondant à la formule CF₂=CFOY₀, dans laquelle Y₀ est un C₁-C₁₂ alkyle ou (per)fluoroalkyle, ou un C₁-C₁₂ oxyalkyle ou un C₁-C₁₂ (per) fluorooxyalkyle, ledit groupe Y₀ comprenant un groupe acide carboxylique ou sulfonique, sous sa forme d'acide, d'halogénure d'acide ou de sel ;
- des (per)fluorodioxoles, de formule : 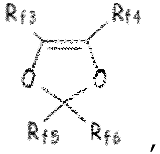 chacun parmi R_{f3}, R_{f4}, R_{f5}, R_{f6}, identiques ou différents les uns des autres, étant indépendamment un atome de fluor, un fluoroalkyle ou per(halo)fluoroalkyle en C₁-C₆, éventuellement comprenant un ou plusieurs atomes d'oxygène, par ex. -CF₃, -C₂F₅, -C₃F₇, -OCF₃, -OCF₂CF₂OCF₃.

3. Composition (C) selon la revendication 1 ou 2, ledit fluoroélastomère (A) étant choisi parmi :
(1) des copolymères à base de VDF, dans lesquels le VDF est copolymérisé avec au moins un comonomère supplémentaire choisi dans le groupe constitué par :
(a) des perfluorooléfines en C₂-C₈, telles que le tétrafluoroéthylène (TFE), l'hexafluoropropylène (HFP) ;
(b) des oléfines en C₂-C₈ contenant de l'hydrogène, telles que le fluorure de vinyle (VF), le trifluoroéthylène (TrFE), l'hexafluoroisobutène (HFIB), des perfluoroalkyl-éthylènes de formule CH₂=CH-R_{f}, R_{f} étant un groupe C₁-C₆ perfluoroalkyle ;
(c) des fluorooléfines en C₂-C₈ comprenant au moins l'un parmi iode, chlore et brome, telles que le chlorotrifluoroéthylène (CTFE) ;
(d) des (per)fluoroalkylvinyléthers (PAVE) de formule CF₂=CFOR_{f}, R_{f} étant un groupe C₁-C₆ (per) fluoroalkyle, préférablement CF₃, C₂F₅, C₃F₇ ;
(e) des (per)fluoro-oxy-alkylvinyléthers de formule CF₂=CFOX, X étant un C₁-C₁₂ ((per)fluoro)-oxyalkyle comprenant des atomes d'oxygène caténaires, par ex. le groupe perfluoro-2-propoxypropyle ;
(f) des (per)fluorodioxoles possédant la formule : 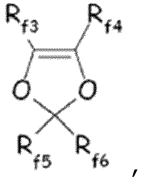 chacun parmi R_{f3}, R_{f4}, R_{f5}, R_{f6}, identiques ou différents les uns des autres, étant indépendamment choisi dans le groupe constitué par un atome de fluor et des groupes C₁-C₆ (per)fluoroalkyle, éventuellement comprenant un ou plus d'un atome d'oxygène, tels que notamment -CF₃, -C2F5, -C₃F₇, - OCF₃, -OCF₂CF₂OCF₃; préférablement, des perfluorodioxoles ;
(g) des (per)fluoro-méthoxy-vinyléthers (MOVE, ci-après) possédant la formule :
CF₂=CFOCF₂OR_{f2}
R_{f2} étant choisi dans le groupe constitué par des C₁-C₆ (per)fluoroalkyles ; des C₅-C₆ (per)fluoroalkyles cycliques ; et des C₂-C₆ (per)fluorooxyalkyles, comprenant au moins un atome d'oxygène caténaire ; R_{f2} étant préférablement -CF₂CF₃ (MOVE1) ; -CF₂CF₂OCF₃ (MOVE2) ; ou -CF₃ (MOVE3) ;
(h) des oléfines en C₂-C₈ non fluorées (OI), par exemple l'éthylène et le propylène ; et
(2) des copolymères à base de TFE, dans lesquels le TFE est copolymérisé avec au moins un comonomère supplémentaire choisi dans le groupe constitué de (c), (d), (e), (g), (h) et (i) comme détaillé ci-dessus.

4. Composition (C) selon l'une quelconque des revendications précédentes, le fluoroélastomère (A) comprenant au moins l'un parmi des sites de durcissement de type chlore, iode et brome (plus préférablement iode et/ou brome), en une quantité telle que la teneur en chlore, en iode et en brome dans le fluoroélastomère (A) est de 0,001 à 10 % en poids, par rapport au poids total du fluoroélastomère (A). Parmi ceux-ci, les sites de durcissement de type iode étant ceux choisis pour maximiser la vitesse de durcissement, de sorte que les fluoroélastomères (A) comprenant des sites de durcissement de type iode sont préférés.

5. Composition (C) selon l'une quelconque des revendications précédentes, le polymère (PAI) étant choisi dans le groupe constitué par des polymères comprenant plus de 50 % en moles de motifs répétitifs comprenant au moins un cycle aromatique, au moins un groupe imide, tel quel et/ou sous sa forme d'acide amique, et au moins un groupe amide qui n'est pas inclus dans la forme d'acide amique d'un groupe imide [motifs répétitifs (R_{PAI})], qui sont choisis dans le groupe constitué par des motifs selon l'une quelconque parmi les formules (R_{PAI}-a) et (R_{PAI}-b) : 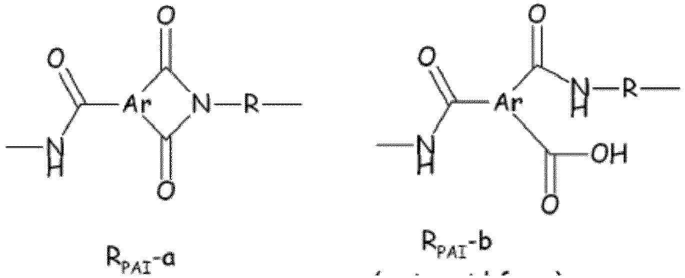 (forme imide) (forme acide amique)
- Ar étant un groupe aromatique trivalent ; typiquement Ar étant choisi dans le groupe constitué par les structures suivantes : 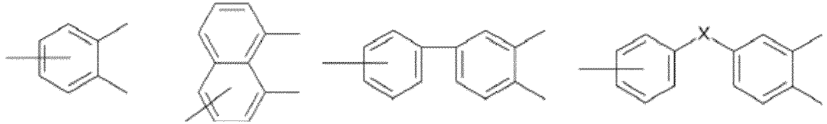 et des structures éventuellement substituées correspondantes, X étant -O-, -C(O)-, - CH₂-, - C(CF₃)₂-, -(CF₂)ₙ-, n étant un entier de 1 à 5 ;
- R étant un groupe aromatique divalent ; typiquement R étant choisi dans le groupe constitué par les structures suivantes : 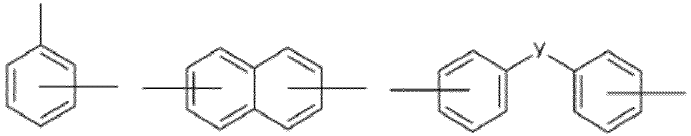 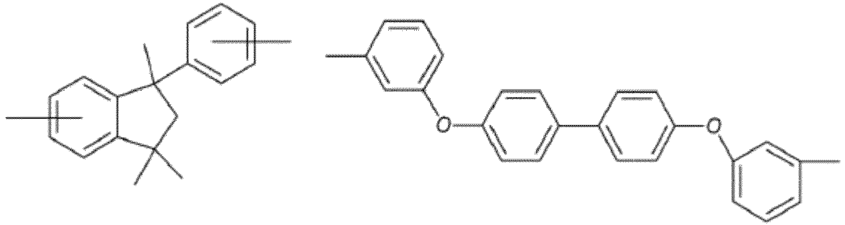 et des structures éventuellement substituées correspondantes, Y étant -O-, -S-, - SO₂-, -CH₂-, -C(O)-, -C(CF₃)₂-, -(CF₂)ₙ, n étant un entier de 0 à 5.

6. Composition (C) selon la revendication 5, lesdits motifs répétitifs (R_{PAI}) étant choisis parmi les motifs répétitifs (l), (m) et (n), sous leurs formes amide-imide (a) ou amide-acide amique (b) :
(l) 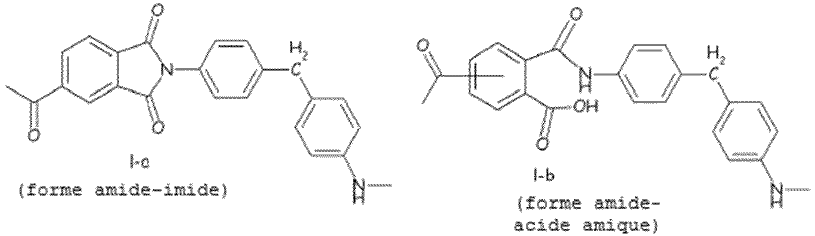 la fixation des deux groupes amide au cycle aromatique tel que présenté en (l-b) sera comprise comme représentant les configurations polyamide-acide amique 1,3 et 1,4 ;
(m) 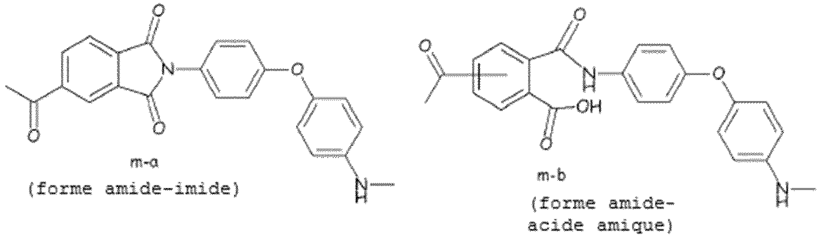 la fixation des deux groupes amide au cycle aromatique tel que présenté en (m-b) sera comprise comme représentant les configurations polyamide-acide amique 1,3 et 1,4 ;
(n) 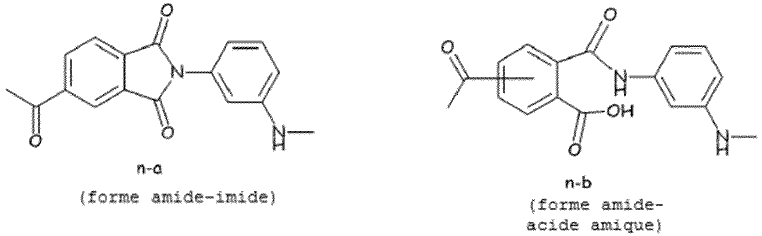 la fixation des deux groupes amide au cycle aromatique tel que présenté en (n-b) sera comprise comme représentant les configurations polyamide-acide amique 1,3 et 1,4.

7. Composition (C) selon l'une quelconque des revendications précédentes, qui comprend ledit polymère (PAI) en une quantité d'au moins 1,0 phr, plus préférablement d'au moins 2,0 phr, et d'au plus 25,0 phr, plus préférablement d'au plus 18,0 phr, par rapport au fluoroélastomère (A).

8. Composition (C) selon l'une quelconque des revendications précédentes, ledit au moins un système de réticulation étant un système de réticulation à base de peroxyde comprenant au moins un peroxyde organique [peroxyde (0)] et au moins un composé polyinsaturé [composé (U)], et ledit peroxyde (O) étant préférablement choisi dans le groupe constitué par :
- des peroxydes de di(alkyle/aryle), y compris par exemple le peroxyde de di-tert-butyle, le 2,5-diméthyl-2,5-bis(tert-butylperoxy)hexane, le di(t-butylperoxyisopropyl)benzène, le peroxyde de dicumyle ;
- des peroxydes de diacyle, y compris le peroxyde de dibenzoyle, le peroxyde d'acide disuccinique, le di(4-méthylbenzoyl)peroxyde, le di(2,4-dichlorobenzoyl)peroxyde, le peroxyde de dilauroyle, le peroxyde de décanoyle ;
- des acides et esters percarboxyliques, y compris le perbenzoate de di-tert-butyle, le peroxy-2-éthylhexanoate de t-butyle, le peroxy-2-éthylhexanoate de 1,1,3,3-tétraméthyléthylbutyle, 2,5-diméthyl-2,5-di(2-éthylhexanoylperoxy)hexane ;
- des peroxycarbonates y compris notamment le di(4-t-butylcyclohexyl)peroxydicarbonate, di(2-phénoxyéthyl)peroxydicarbonate, le bis[1,3-diméthyl-3-(tert-butylperoxy)butyl]carbonate, le t-hexylperoxyisoproprylcarbonate, le t-butylperoxyisopropylcarbonate,
- des percétals tels que le 1,1-bis(tert-butylperoxy)cyclohexane et le 2,2-bis(tertbutylperoxy)butane ;
- des peroxydes de cétone tels que le peroxyde de cyclohexanone et le peroxyde d'acétylacétone ;
- des hydroperoxydes organiques tels que l'hydroperoxyde de cumène, l'hydroperoxyde de tert-butyle, le peroxyde de méthyléthylcétone (appelé également 2-[(2-hydroperoxybutan-2-yl)peroxy]butane-2-peroxol) et l'hydroperoxyde de pinane ;
- des initiateurs de type azo solubles dans l'huile tels que 2,2'-azobis(4-méthoxy-2,4-diméthylvaléronitrile), 2,2'-azobis(2,4-diméthylvaléronitrile), 2,2'-azobis(isobutyronitrile), 2,2'-azobis(2-cyano-2-butane), diméthyl-2,2'-azobisdiméthyli sobutyrate, diméthyl-2,2'-azobis(2-méthylpropionate), 2,2'-azobis(2-méthylbutyronitrile), 1,1'-azobis(cyclohexane-l-carbonitrile), 2,2'-azobis[N-(2-propényl)-2-méthylpropionamide], 1-[(1-cyano-1 - méthyléthyl)azo]formamide, 2,2'-azobis(N-cyclohexyl-2-méthylpropionamide), 2,2'-azobis(isobutyronitrile), 2,2'-azobis(2-cyano-2-butane), diméthyl-2,2'-azobisdiméthylisobutyrate, 1,1'-azobis(cyclohexanecarbonitrile), 2-(t-butylazo)-2-cyanopropane, 2,2'-azobis[2-méthyl-N-(1,1)-bis(hydroxyméthyl)-2-hydroxyéthyl]propionamide, 2,2'-azobis[2-méthyl-N-hydroxyéthyl]-proprionamide, 2,2'-azobis(N,N'-diméthylèneisobutyramine), 2,2'-azobis(2-méthyl-N-[1,1-bis(hydroxyméthyl)-2-hydroxyéthyl]propionamide), 2,2'-azobis(2-méthyl-N-[1,1-bis(hydroxyméthyl)éthyl]proprionamide), 2,2'-azobis[2-5 méthyl-N-(2-hydroxyéthyl)propionamide], dihydrate de 2,2'-azobis(isobutyramide), 2,2'-azobis(2,2,4-triméthylpentane), 2,2'-azobis(2-méthylpropane).

9. Composition (C) selon la revendication 8, la quantité de peroxyde (O) dans la composition (C) étant de 0,1 à 15 phr, préférablement de 0,2 à 12 phr, plus préférablement de 1,0 à 7,0 phr, par rapport à 100 parties en poids de fluoroélastomère (A) .

10. Composition (C) selon l'une quelconque des revendications 8 à 9, le composé (U) étant choisi dans le groupe constitué par :
- des composés (U) comprenant deux insaturations carbone-carbone, qui sont préférablement choisies dans le groupe constitué par des bis-oléfines [bis-oléfines (OF)] possédant la formule générale 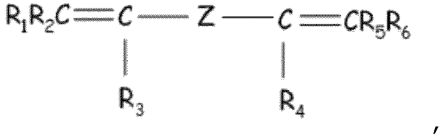 R₁, R₂, R₃, R₄, R₅ et R₆, identiques ou différents les uns des autres, étant H ou C₁-C₅ alkyle ; Z étant un radical (hydro)carboné en C₁-C₁₈ linéaire ou ramifié (y compris un radical alkylène ou cycloalkylène), contenant éventuellement des atomes d'oxygène, préférablement au moins partiellement fluoré, ou un radical (per)fluoro(poly)oxyalkylène comprenant une ou plusieurs liaisons éthérées caténaires ; et
- des composés (U) comprenant trois insaturations carbone-carbone, qui sont préférablement choisis dans le groupe constitué par :
- des composés de type cyanurate trisubstitué de formule générale : 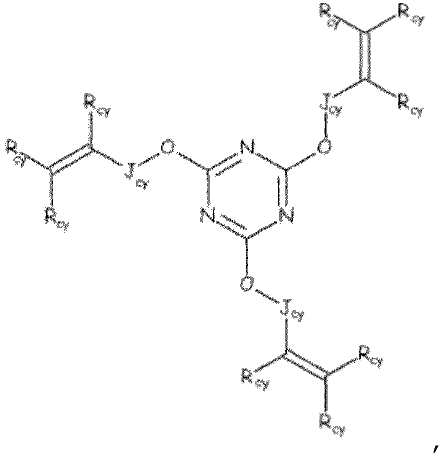
chacun des R_{cy}, identiques ou différents les uns des autres et en chaque occurrence, étant indépendamment choisi parmi H et un groupe -R_{rcy} ou -OR_{rcy}, R_{rcy} étant C₁-C₅ alkyle, comprenant possiblement un ou plusieurs halogènes, et chacun des J_{cy}, identiques ou différents les uns des autres et en chaque occurrence, étant indépendamment choisi parmi une liaison et un groupe hydrocarboné divalent, comprenant éventuellement des hétéroatomes ;
les composés de type cyanurate trisubstitué comprenant notamment de manière préférée le cyanurate de triallyle, le cyanurate de trivinyle ;
- des composés de type isocyanurate trisubstitué de formule générale : 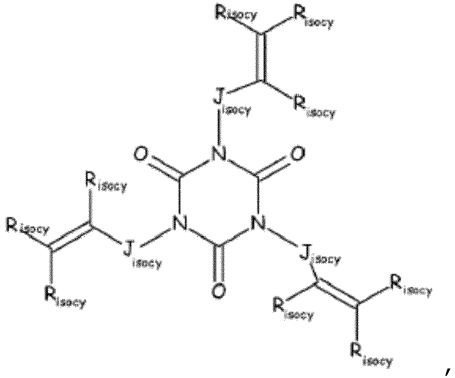
chacun des R_{isocy}, identiques ou différents les uns des autres et en chaque occurrence, étant indépendamment choisi parmi H et un groupe -R_{risocy} ou -OR_{risocy}, R_{risocy} étant C₁-C₅ alkyle, comprenant possiblement un ou plusieurs halogènes, et chacun des J_{isocy}, identiques ou différents les uns des autres et en chaque occurrence, étant indépendamment choisi parmi une liaison et un groupe hydrocarboné divalent, comprenant éventuellement des hétéroatomes ;
les composés de type isocyanurate trisubstitué comprenant notamment de manière préférée l'isocyanurate de triallyle (également appelé « TAIC »), l'isocyanurate de trivinyle, le TAIC étant le plus préféré ;
- des composés de type triazine trisubstituée de formule générale : 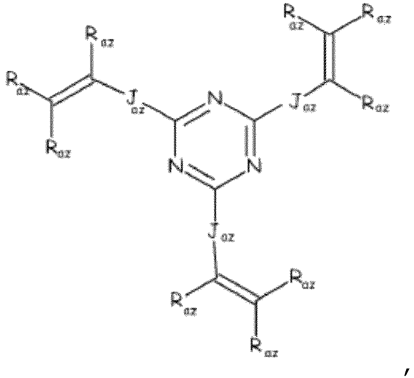 chacun des R_{az}, identiques ou différents les uns des autres et en chaque occurrence, étant indépendamment choisi parmi H et un groupe -R_{raz} ou -OR_{raz}, R_{raz} étant C₁-C₅ alkyle, comprenant possiblement un ou plusieurs halogènes, et chacun des J_{az}, identiques ou différents les uns des autres et en chaque occurrence, étant indépendamment choisi parmi une liaison et un groupe hydrocarboné divalent, comprenant éventuellement des hétéroatomes ;
- des composés de type phosphite trisubstitué de formule générale : 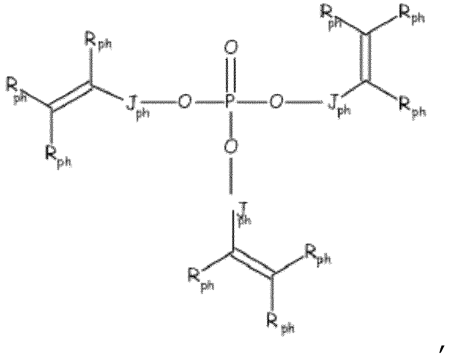 chacun des Rₚₕ, identiques ou différents les uns des autres et en chaque occurrence, étant indépendamment choisi parmi H et un groupe -Rᵣₚₕ ou -ORᵣₚₕ, Rᵣₚₕ étant C₁-C₅ alkyle, comprenant possiblement un ou plusieurs halogènes, et chacun des Jₚₕ, identiques ou différents les uns des autres et en chaque occurrence, étant indépendamment choisi parmi une liaison et un groupe hydrocarboné divalent, comprenant éventuellement des hétéroatomes ; les composés de type phosphite trisubstitué comprenant notamment de manière préférée le phosphite de triallyle ;
- des alkyltrisiloxanes trisubstitués de formule générale : 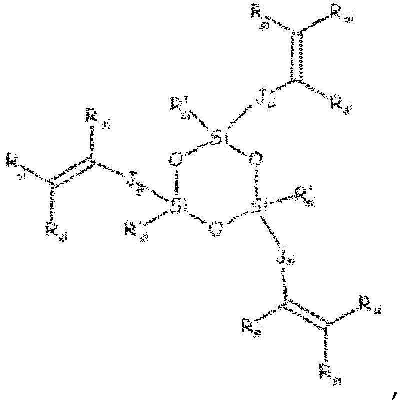 chacun des Rₛᵢ, identiques ou différents les uns des autres et en chaque occurrence, étant indépendamment choisi parmi H et un groupe -Rᵣₛᵢ ou -ORᵣₛᵢ, Rᵣₛᵢ étant C₁-C₅ alkyle, comprenant possiblement un ou plusieurs halogènes, chacun des R'ₛᵢ, identiques ou différents les uns des autres et en chaque occurrence, étant indépendamment choisi parmi des groupes C₁-C₅ alkyle, comprenant possiblement un ou plusieurs halogènes, et chacun des Jₛᵢ, identiques ou différents les uns des autres et en chaque occurrence, étant indépendamment choisi parmi une liaison et un groupe hydrocarboné divalent, comprenant éventuellement des hétéroatomes ; les composés de type alkyltrisiloxanes trisubstitués comprenant notamment de manière préférée le 2,4,6-trivinyl-méthyltrisiloxane et le 2,4,6-trivinyl-éthyltrisiloxane ;
- des composés de type acrylamide N,N-disubstitué de formule générale : 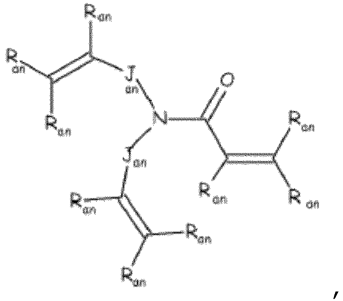 chacun des Rₐₙ, identiques ou différents les uns des autres et en chaque occurrence, étant indépendamment choisi parmi H et un groupe -Rᵣₐₙ ou -ORᵣₐₙ, Rᵣₐₙ étant C₁-C₅ alkyle, comprenant possiblement un ou plusieurs halogènes, et chacun des Jₐₙ, identiques ou différents les uns des autres et en chaque occurrence, étant indépendamment choisi parmi une liaison et un groupe hydrocarboné divalent, comprenant éventuellement des hétéroatomes ; les composés de type acrylamide N,N-disubstitué comprenant notamment de manière préférée le N,N-diallylacrylamide ; et
- des composés (U) comprenant quatre insaturations carbone-carbone ou plus, qui sont préférablement choisis parmi la tris(diallylamine)-s-triazine de formule 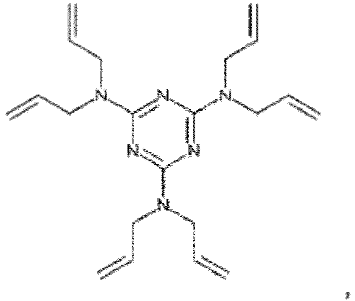 l'hexa-allylphosphoramide, le N,N,N',N'-tétra-allyl-téréphtalamide, le N,N,N',N'-tétra-allyl-malonamide.

11. Composition selon l'une quelconque des revendications précédentes, la quantité du composé (U) se situant dans la plage de 0,1 à 20 parties en poids par 100 parties en poids (phr) de fluoroélastomère (A), préférablement de 1 à 15 parties en poids par 100 parties en poids de fluoroélastomère (A), plus préférablement de 1 à 10 parties en poids par 100 parties en poids de fluoroélastomère (A). Un procédé pour la fabrication d'articles façonnés comprenant le durcissement de la composition (C), selon l'une quelconque des revendications 1 à 13.

12. Composition (C) selon l'une quelconque des revendications 1 à 7, ledit au moins un système de réticulation étant un système de réticulation à base ionique comprenant au moins un composé polyhydroxylé, au moins un agent accélérant, et au moins un oxyde métallique basique préférablement choisi dans le groupe constitué par ZnO, MgO, PbO et leurs mélanges.

13. Procédé pour la fabrication de la composition (C), selon l'une quelconque des revendications 1 à 12, ledit procédé comprenant le mélange :
- du fluoroélastomère (A) ;
- du système de réticulation ; et
- du polymère (PAI).

14. Procédé pour la fabrication d'articles façonnés comprenant le durcissement de la composition (C), selon l'une quelconque des revendications 1 à 12.

15. Article durci obtenu à partir de la composition (C), selon l'une quelconque des revendications 1 à 12, ledit article durci étant choisi dans le groupe constitué par des articles d'étanchéité, y compris des joints toriques (carrés), des garnitures, des joints, des diaphragmes, des garnitures étanches d'arbre, des joints de tige de soupape, des anneaux de piston, des joints de vilebrequin, des joints d'arbre à cames, et des bagues d'étanchéité d'huile ou possiblement des tuyaux et des tubes, en particulier des tuyaux flexibles ou d'autres objets, y compris des conduits pour l'acheminement de fluides hydrocarbonés et de carburants.

16. Assemblage comprenant un substrat et au moins un article durci, selon la revendication 15.
